(19) **Europäisches Patentamt / European Patent Office / Office européen des brevets**

(11) **EP 4 675 284 A1**

(12) **EUROPEAN PATENT APPLICATION**
published in accordance with Art. 153(4) EPC

(43) Date of publication:
 **07.01.2026 Bulletin 2026/02**

(21) Application number: **24780018.8**

(22) Date of filing: **22.03.2024**

(51) International Patent Classification (IPC):
 **G01Q 30/04** (2010.01)  **G01Q 60/24** (2010.01)
 **G06T 7/00** (2017.01)

(52) Cooperative Patent Classification (CPC):
 **G01Q 30/04; G01Q 60/24; G06T 7/00**

(86) International application number:
 **PCT/JP2024/011391**

(87) International publication number:
 **WO 2024/203900 (03.10.2024 Gazette 2024/40)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **24.03.2023 JP 2023047940**

(71) Applicant: **Morgenrot Inc.
 Tokyo 102-0083 (JP)**

(72) Inventor: **ITO Hiroshi
 Tokyo 102-0083 (JP)**

(74) Representative: **Appleyard Lees IP LLP
 15 Clare Road
 Halifax HX1 2HY (GB)**

(54) **INFORMATION PROCESSING DEVICE, INFORMATION PROCESSING METHOD AND PROGRAM**

(57) The objective of the present invention is to provide a technique with which it is possible for a feature of a fine substance obtained on a certain scale to be grasped on a smaller scale. A server 1 is provided with a data generating means including a data generating unit 31 and a learning model 41. With regard to a statistical index indicating a characteristic of a material, the learning model 41 uses a predetermined algorithm that generates output data indicating the structure of a material, the output data exhibiting an index score that is better than that of input data indicating the structure of the material.

The data generating unit 31 inputs structural data (for example, data relating to the macro-scale uneven shape of a material surface) indicating a structure of a predetermined material as input data into the learning model 41, generates, from the learning model 41, structural data (for example, data relating to the atomic-scale uneven shape of the material surface) having an image quality that has been enhanced compared with the input structural data, and outputs the resulting structural data to a user terminal 2.

FIG. 3

**Description**

TECHNICAL FIELD

The present invention relates to an information processing device, an information processing method, and a program.

BACKGROUND ART

Techniques pertaining to microscopes for measuring, for example, the minute shape and structure of a substance and the material of the substance (these are hereinafter referred to as "features") have been constantly progressing, and while features of the macroscale level and levels close thereto can be measured, further enhancement of resolving power has been proceeded with (e.g., Patent Document 1).

Citation List

Patent Document

Patent Document 1: Japanese Unexamined Patent Application, Publication No. 2012-233845

DISCLOSURE OF THE INVENTION

Problems to be Solved by the Invention

However, the prior art noted above has restrictions on hardware such as a probe, and cannot sufficiently meet the need to grasp features on a narrower scale.
The present invention was achieved in view of such a situation, and an object thereof is to provide a technique for allowing features obtained for a minute substance on a certain scale to be grasped on a narrower scale.

Means for Solving the Problems

In order to achieve the object noted above, an information processing device according to one aspect of the present invention includes
a data generation means for acquiring, with respect to a statistic index indicating the features of a material and on the basis of a prescribed algorithm for generating output data that indicates the structure of the material and indicates a better index score than input data indicating the structure of the material, first feature data indicating the structure of a prescribed material as the input data, and for generating and outputting, as the output data, second feature data indicating the structure of the prescribed material.
An information processing method and a program according to one aspect of the present invention correspond to the above-noted information processing system according to one aspect of the present invention.

Effects of the Invention

The present invention can provide a technique for allowing features obtained for a minute substance on a certain scale to be grasped on a narrower scale.

BRIEF DESCRIPTION OF THE DRAWINGS

FIG. 1 illustrates a configuration example of an information processing system that includes a server constituting one embodiment of the information processing device of the present invention;
FIG. 2 is a block diagram illustrating an example of the hardware configuration of the server in the distributed processing system in FIG. 1;
FIG. 3 is a functional block diagram illustrating a functional configuration example of the server in FIG. 2;
FIG. 4 is a flowchart indicating operations of a server provided with the functional configuration in FIG. 3;
FIG. 5 illustrates an example of a situation in which the server in FIGS. 2 and 3 is assumed to be used;
FIG. 6 illustrates a measurement outline for, for example, an atomic force microscope (AFM) serving as a measurement instrument for inputting measurement data to the server in FIGS. 2 and 3;

FIG. 7 illustrates fractal graphs and self-affine graphs for an example of the uneven shape of a material surface;

FIG. 8 illustrates an amplitude and a period with which, when quantifying the unevenness of a material surface, it is examined what type of waveform component can be used to build the unevenness;

FIG. 9 illustrates an example in which individual PSDs are indicated for fractal and self-affinity by using line graphs;

FIG. 10 indicates a measurement image of the uneven shape of a typical material surface, and a double-logarithmic graph indicating the PSD of the measurement image;

FIG. 11 indicates a measurement image of the uneven shape of a material surface, and a double-logarithmic graph indicating the PSD of the measurement image, the measurement image being obtained when the resolution of measurement is higher than that of the measurement in FIG. 10 (when a thin tip used);

FIG. 12 illustrates an example of use of a learning model with respect to a server in embodiments;

FIG. 13 illustrates a conversion step of converting low-resolution data into high-resolution data with respect to a server in embodiments;

FIG. 14 illustrates a conversion step of converting high-resolution data into low-resolution data;

FIG. 15 illustrates an example of the configuration of the deep learning function of a learning model built by a training unit with respect to a server in present embodiments;

FIG. 16 illustrates an example of the configuration of a generator (G) of the learning model in FIG. 15;

FIG. 17 illustrates an example of the configuration of a discriminator (D) of the learning model in FIG. 15;

FIG. 18 is a flowchart (example 1) indicating a training process for the generator 151(G) in FIG. 16 and the discriminator 152(D) in FIG. 17;

FIG. 19 is a flowchart (example 2) indicating a training process for the generator 151(G) in FIG. 16 and the discriminator 152(D) in FIG. 17;

FIG. 20 is a flowchart indicating an inference process in which the generator 151 (G) in FIG. 16 is used;

FIG. 21 illustrates an example in which the learning model in FIG. 15 generates 512×512 pixels of output data from 64×64 pixels of input data;

FIG. 22 illustrates improvement in prediction accuracy with respect to a first prediction, a second prediction, and following predictions;

FIG. 23 illustrates, with respect to a server in embodiments, a first case in which complementing processing is performed when a measurement image of interest is measurement data that has been subjected to decimation;

FIG. 24 illustrates, with respect to a server in embodiments, a second case in which complementing processing is performed when a measurement image of interest is measurement data that has been subjected to decimation;

FIG. 25 illustrates a third case in which a measurement data range is enlarged for an exceptional example of measurement data in which known sites and unknown sites coexist;

FIG. 26 indicates double-logarithmic PSD graphs for material surface uneven-shape data;

FIG. 27 illustrates an example of a mechanism by which physical noise is generated when measuring material surface uneven-shape data (feature data);

FIG. 28 illustrates an example of feature data that differs according to whether physical noise has been generated;

FIG. 29 illustrates data differences based on whether white noise is present; and

FIG. 30 illustrates an example of use of a learning model for a situation in which fine-tuning is performed.

PREFERRED MODE FOR CARRYING OUT THE INVENTION

The following describes one embodiment of the present invention by referring to the drawings, as appropriate. First, descriptions are given of the background for the creation of the present invention. Many of a wide variety of phenomena and functional expressions in materials originate from atoms. For a technical development directed at macroscale (primarily, $10^{-6}$ m or greater), to which a multitude of machines and material products are applied, technical reviews are preferably performed in consideration of phenomena on the atomic scale (primarily, a scale of approximately $10^{-10}$m). However, an enormous number of atoms are required to represent a macroscale material, and it is difficult, as a general rule, to deal with the two scales in a unified way. Thus, technical reviews are often performed with the two scales being considered separately.

As an example, tribology is referred to. When different materials of a machine product slide, a friction factor conforming to the Stribeck curve or a friction factor approximately set to a fixed value is used for macroscale. For atomic scale, meanwhile, the different materials come into contact with each other only at a real constant surface; and physical adsorption and chemisorption caused mainly by atoms may possibly occur on the real constant surface, but at the other sites, such atomic interactions do not occur. Thus, in comparison with ideal settings, it is inappropriate to set the same friction factor for the entirety of, inter alia, a macroscale contact surface without distinguishing a real constant surface from other surfaces.

In many cases, what can be grasped regarding the real material surface is limited to macroscale under restrictions pertaining to, for example, various types of measurement devices. Allowing a material structure on a narrower scale to be grasped under such restrictions will facilitate the grasping of material phenomena and the designing of materials. Errors (noise) pertaining to measurement occur in various types of measurement devices and the like. Removing such noise and allowing a material structure close to the real to be obtained will facilitate the grasping of material phenomena and the designing of materials.

Now, descriptions are given of a scheme for implementing the present invention by means of an information processing device. In this case, the information processing device has input thereto feature data indicating a material structure, and outputs, with respect to a statistic index indicating the features of a material, feature data indicating a better index score than the input.

For example, the input may be feature data obtained by measuring the material structure by using an instrument such as an atomic force microscope (AFM).

The process of deriving the output from the input may be performed using a numerical expression or equation that is appropriately set, or may be performed through machine learning in which a loss function that is appropriately set is used. The machine learning includes deep learning.

For example, the numerical expression or equation and the loss function can be determined using a self-affine law. The self-affinity law is a shape similarity law for different scales. The self-affinity law pertains to publicly known function systems, and corresponding matching case examples are found in terms of, for example, geographical structures and plant architectures. Thus, the self-affinity law can be used for the present invention, which is directed at materials.

Besides the self-affinity law, for example, a law such as fractal can be used to determine the numerical expression or equation and the loss function. In this case, a function system is newly considered in the present invention so that an output can be provided without being limited to the self-affinity law. The unevenness of a material surface is dealt with as a two-dimensional shape on the assumption that information on heights is disposed on a two-dimensional plane. In addition to two-dimensional planes, the present invention can also be applied to planes in other dimensions, e.g., one dimension (scan line on the material surface), three dimensions (grain boundary in the material, porous structure).

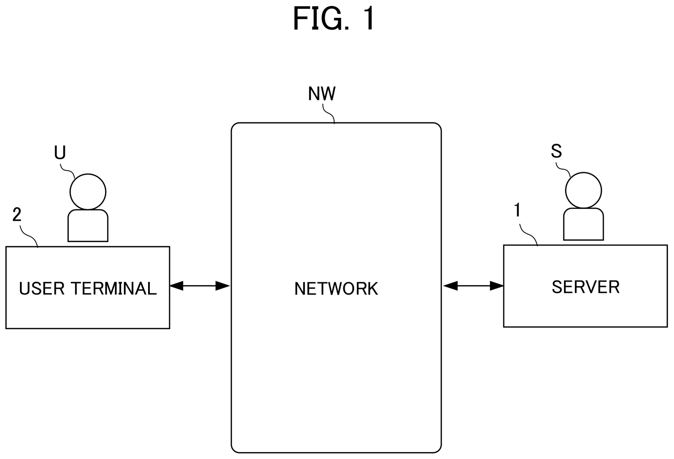

The following describes embodiments by taking a specific information processing system as an example. FIG. 1 illustrates a configuration example of an information processing system that includes a server constituting one embodiment of the information processing device of the present invention.

The information processing system depicted in FIG. 1 is formed by connecting a server 1 managed by a supervisor S to a user terminal 2 managed by a user U such that the two can communicate with each other via a prescribed network NW.

The server 1, which is an information processing device, e.g., a computer, has input thereto feature data (feature data on a prescribed scale) indicating a material structure, and outputs, with respect to a statistic index indicating the features of a material, feature data indicating a better index score than the input (feature data on a narrower scale than the input feature data). Specifically, in response to a conversion request from the user terminal 2, the server 1 converts, for example, macroscale uneven-shape data pertaining to a material surface into, for example, approximately atomic-scale uneven-shape data, and outputs the approximately atomic-scale uneven-shape data to the user terminal 2. For example, the user terminal 2 is an information processing device such as a computer, a smartphone, or a tablet terminal. Specifically, the user terminal 2 makes a conversion request for the server 1 to convert, for example, macroscale uneven-shape data pertaining to a material surface into, for example, an atomic-scale uneven-shape data, acquires, as a response to the conversion request from the server 1, atomic-scale uneven-shape data obtained as a result of the conversion, and displays the acquired data on a screen.

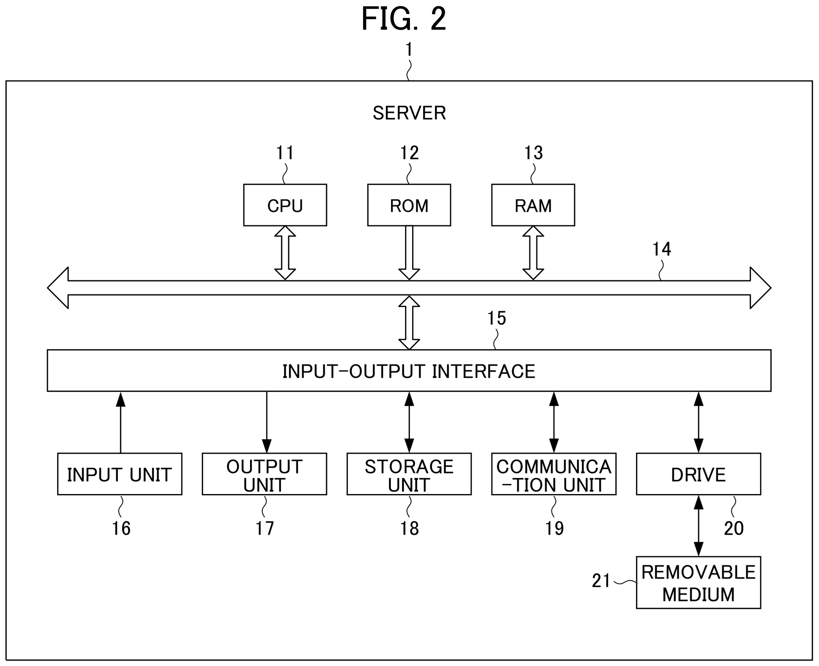

FIG. 2 is a block diagram illustrating an example of the hardware configuration of the server in the information processing system in FIG. 1.

The server 1 includes a central processing unit (CPU) 11, a read only memory (ROM) 12, a random access memory (RAM) 13, a bus 14, an input-output interface 15, an input unit 16, an output unit 17, a storage unit 18, a communication unit 19, and a drive 20.

The CPU 11 performs various types of processing in accordance with a program recorded in the ROM 12 or a program loaded from the storage unit 18 into the RAM 13. The processing may be performed not only by using the CPU but also by using an accelerator (e.g., graphics processing unit (GPU)) as necessary. The RAM 13 also has appropriately stored therein, for example, data required for the CPU 11 to perform various types of processing.

The CPU 11, the ROM 12, and the RAM 13 are connected to each other via the bus 14. The input-output interface 15 is also connected to the bus 14. The input unit 16, the output unit 17, the storage unit 18, the communication unit 19, and the drive 20 are connected to the input-output interface 15. In a case where an accelerator is used, the accelerator is also connected to the bus 14 so that the accelerator can give/receive an instruction to/from the CPU 11 and access, for example, the storage unit 18.

The input unit 16 is an instrument such as a keyboard or mouse provided with, for example, various types of hardware buttons, and inputs various types of information in accordance with an instructing manipulation performed by a manipulator. The input unit 16 further includes a measurement instrument, e.g., an atomic force microscope (AFM). The AFM measures the minute surface of a material (substance) under measurement, and acquires uneven-shape data (feature data indicating the material structure) on a prescribed scale (e.g., macroscale or narrower scale). The material surface uneven-shape data acquired by the AFM is stored in the storage unit 18. The output unit 17 is formed from a display such as a liquid-crystal display, and displays various types of images.

The storage unit 18 is formed from, for example, a hard disk and a dynamic random access memory (DRAM) and stores various types of data. The communication unit 19 controls communication with other devices (e.g., user terminal 2) via the network NW, which includes the Internet.

The drive 20 is provided as necessary. The drive 20 is appropriately mounted with a removable medium 21 formed from, for example, a magnetic disk, an optical disc, a magnetooptical disk, or a semiconductor memory. A program read from the removable medium 21 by the drive 20 is installed on the storage unit 18 as necessary. As with the storage unit 18, the removable medium 21 may also store various types of data stored by the storage unit 18.

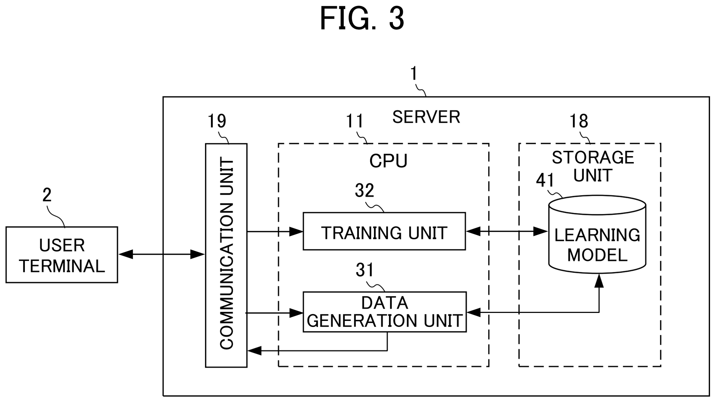

FIG. 3 is a functional block diagram illustrating a functional configuration example of the server in FIG. 2. As depicted in FIG. 3, the storage unit 18 of the server 1 stores a learning model 41 built (generated and updated) by a training unit 32. With respect to a statistic index indicating the features of a material, the learning model 41 uses a prescribed algorithm for generating output data that indicates the structure of the material and indicates a better index score than input data indicating the structure of the material. For example, a self-affinity law or the like is employed for the prescribed algorithm. The self-affinity law is a shape similarity law for different scales, and can be employed for the data generation (data conversion for, for example, improvement in the quality of an original image, noise removal or reduction, data complementing, lowering of image quality) in the present embodiment, which is directed at materials.

As indicated in FIG. 3, the data generation unit 31 functions when data generation processing is performed in the CPU 11 of the server 1. The data generation unit 31 functions as a data generation means by exchanging data with the learning model 41 stored in the storage unit 18. In particular, the data generation means includes the data generation unit 31 and the learning model 41.

The data generation unit 31 inputs feature data to be scaled up to the learning model 41 such that feature data on a narrower scale is output from the learning model 41. Specifically, the data generation unit 31 acquires material surface uneven-shape data indicating the structure of a prescribed material, inputs the data to the learning model 41 as input data, generates narrow-scale (e.g., atomic-scale) material surface uneven-shape data output from the learning model 41 and indicating the structure of the prescribed material, and then outputs the generated data to the user terminal 2. In particular, the data generation unit 31 acquires macroscale uneven-shape data so as to generate and output narrow-scale (e.g., atomic-scale) uneven-shape data as output data.

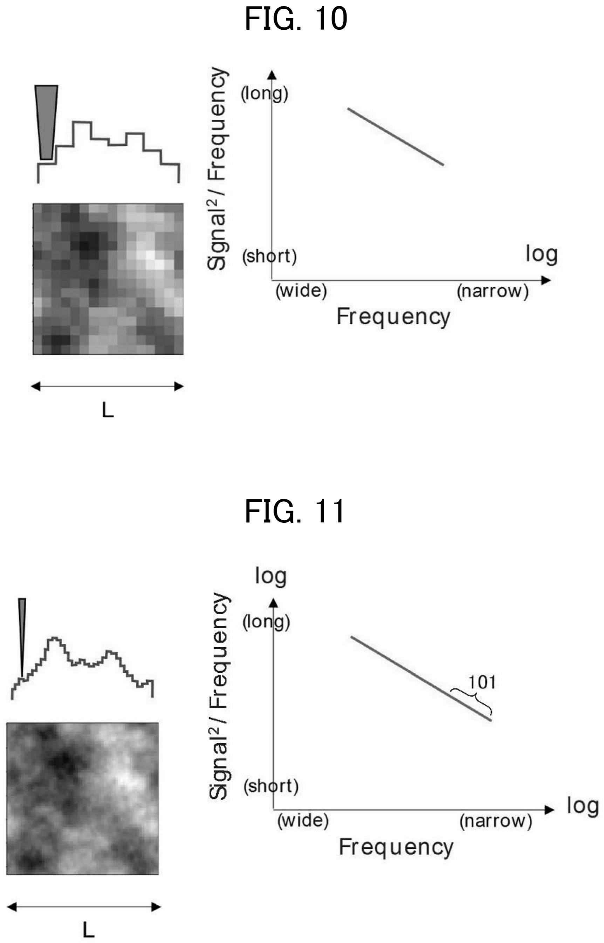

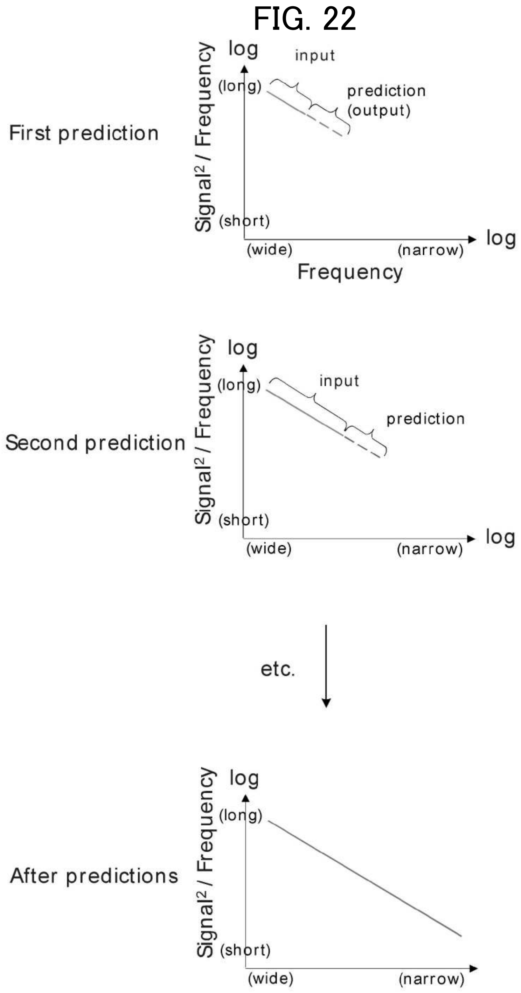

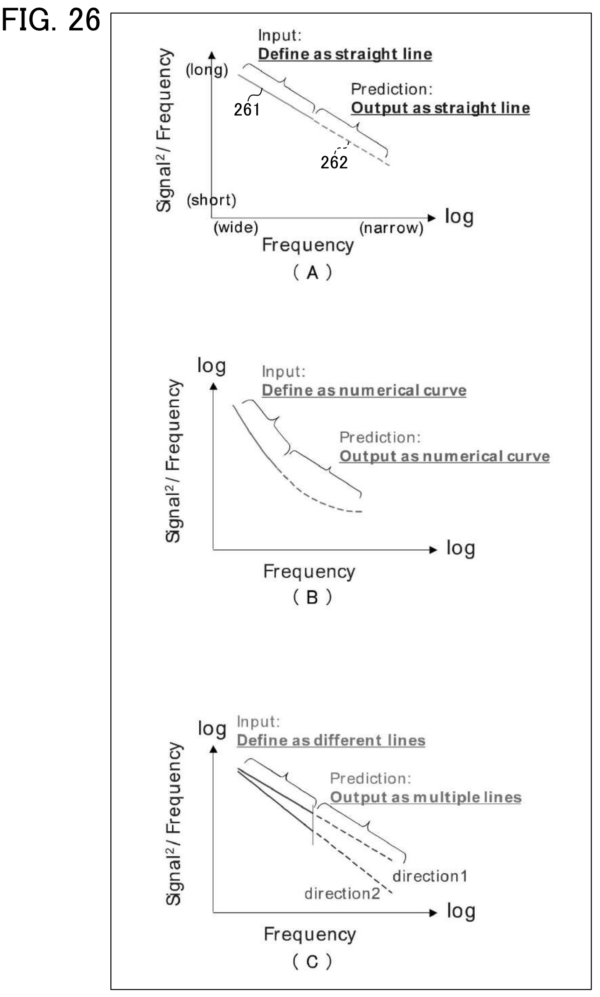

In the present embodiment, prescribed algorithms other than the self-affinity law are also available. The following describes available algorithms. The data generation unit 31 acquires first feature data and outputs second feature data. For example, in a case where an algorithm is employed that uses a "material-structure data amount per unit space" as a statistic index, the data generation means can generate feature data having a larger "material-structure data amount per unit space" than the first feature data and output the same as the second feature data (e.g., portion denoted by numeral 101 in the graph in FIG. 11, lowermost graph in FIG. 22, graphs in FIG. 26). In this case, with respect to a statistic index ("material-structure data amount per unit space") indicating the features of the material, the output data indicates a better index score (larger "material-structure data amount per unit space") than the input data.

For example, in a case where an algorithm is employed that uses a "material-structure power spectral density" as a statistic index, the data generation means can generate feature data having a "material-structure power spectral density" closer to a theoretical value than that of the first feature data is, and output the same as the second feature data (e.g., portion denoted by numeral 101 in the graph in FIG. 11, lowermost graph in FIG. 22, graphs in FIG. 26). In this case, with respect to a statistic index ("material-structure power spectral density") indicating the features of the material, the output data indicates a better index score than the input data ("material-structure power spectral density" is closer to a theoretical value). The theoretical value is, for example, a document pertaining to material properties, or an analysis result or an experimental result suitable for grasping material properties.

In addition, for example, an algorithm can be used that uses a double-logarithmic approximate line of power spectral density for a "material-structure power spectral density" (e.g., portion denoted by numeral 101 in the graph in FIG. 11, lowermost graph in FIG. 22, graphs in FIG. 26). In this case, with respect to a statistic index ("material-structure power spectral density") indicating the features of the material, the output data indicates a better index score than the input data (double-logarithmic approximate line of power spectral density for a "material-structure power spectral density" is closer to a theoretical value).

In addition, an algorithm can be employed that employs a straight line as the approximate line and uses the slope of the straight line of the "material-structure power spectral density" (e.g., graph on the right side in FIG. 11, portion denoted by numeral 101 in the graph in FIG. 11, lowermost graph in FIG. 22, graphs in FIG. 26). In this case, with respect to a statistic index ("material-structure power spectral density") indicating the features of the material, the output data indicates a better index score than the input data (slope of the approximate straight line of the "material-structure power spectral density" is closer to a theoretical value).

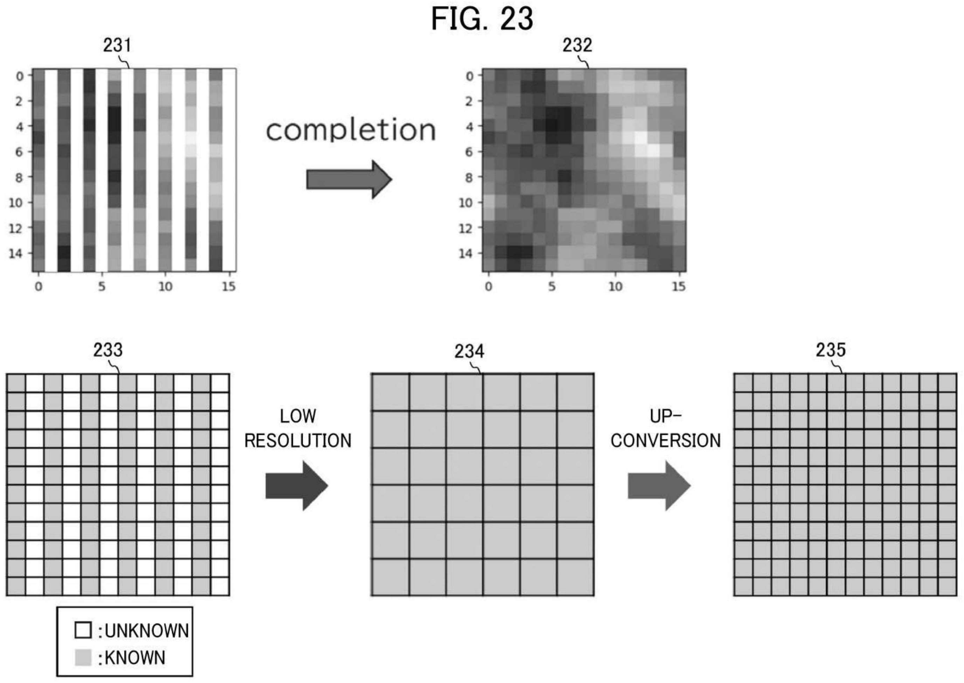

For example, in a case where an algorithm is employed that uses a "lost data amount per unit space" as a statistic index, the data generation means generates feature data having a smaller "lost data amount per unit space" than the first feature data and outputs the same as the second feature data (see, for example, FIGS. 23, 24, and 25). In this case, with respect to a statistic index ("lost data amount per unit space") indicating the features of the material, the output data indicates a better index score (smaller "lost data amount per unit space") than the input data.

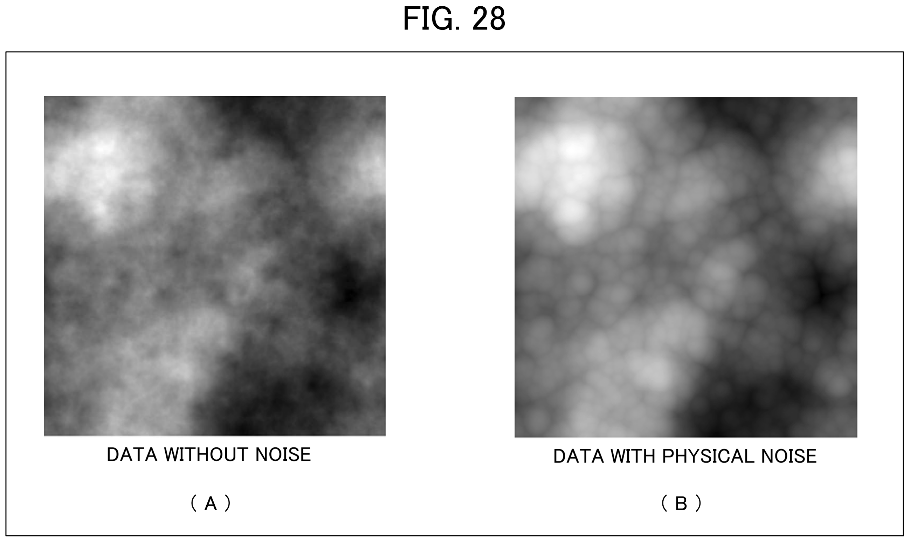

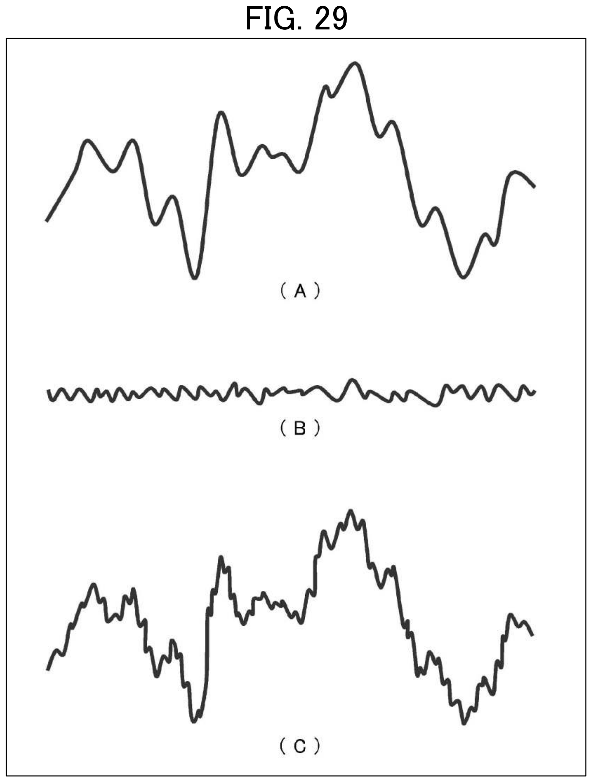

For example, an algorithm can be employed that uses a "noise amount per unit space" as a statistic index. This algorithm uses an amount that can be defined as a "noise amount per unit space" through a physical manipulation performed during the acquisition of the first feature data (see FIG. 28). In this case, the data generation means can generate feature data having a smaller "noise amount per unit space" than the first feature data and output the same as the second feature data. For example, an algorithm can be employed that uses the amount of white noise during the acquisition of the first feature data as a "noise amount per unit space" (see FIG. 29). In this case, with respect to a statistic index ("noise amount per unit space") indicating the features of the material, the output data indicates a better index score (smaller "noise amount per unit space") than the input data.

For example, in a case where an algorithm is employed that uses "material-structure local unevenness" as a statistic index, the data generation means can generate and output, as the second feature data, feature data having "material-structure local unevenness" closer to a theoretical value or an actually measured value than that of the first feature data is. In this case, with respect to a statistic index ("material-structure local unevenness") indicating the features of the material, the output data indicates a better index score than the input data ("material-structure local unevenness" is closer to a theoretical value or an actually measured value). The actually measured value is, for example, an analysis result or an experimental result suitable for grasping the material properties of individual specimens.

For example, in a case where an algorithm is employed that uses "material-surface surface roughness" as a statistic index, the data generation means can generate and output, as the second feature data, feature data having "material-surface surface roughness" closer to a theoretical value or an actually measured value than that of the first feature data is. In this case, with respect to a statistic index ("material-surface surface roughness") indicating the features of the material, the output data indicates a better index score than the input data ("material-surface surface roughness" is closer to a theoretical value or an actually measured value).

For example, in a case where an algorithm is employed that uses an "image evaluation index with material surface as two-dimensional image" as a statistic index, the data generation means can generate and output, as the second feature data, feature data having an "image evaluation index with material surface as two-dimensional image" closer to a theoretical value or an actually measured value than that of the first feature data is. In this case, with respect to a statistic index ("image evaluation index with material surface as two-dimensional image") indicating the features of a material, the output data indicates the better index score than the input data ("image evaluation index with material surface as two-dimensional image" is closer to a theoretical value or an actually measured value).

In the CPU 11 of the server 1, the training unit 32 functions when training processing is performed. The training unit 32 builds (creates and updates) a learning model 41 in the storage unit 18 by using labeled training data as necessary.

In particular, the training unit 32 builds a learning model 41 that output output data upon input data being input thereto by machine learning regarding local material structures. The training process in the present embodiment can be performed through the process noted above.

The following example can be executed as another training process. The training unit 32 initially performs training directed at given material structures so as to build a learning model 41 (first machine learning model) that outputs output data upon input data being input thereto. Then, the training unit 32 reads the learning model 41 and performs training directed at material structures different from the material structures initially directed at, so as to build an updated learning model 41 (second machine learning model). Directing the first and second machine learning models at different material structures, e.g., building a first machine learning model trained with a wide range of material structures such as a whole range of metals and a second machine learning model trained with a narrow range of material structures such as specific metals, allows features of general metals and features of specific metals to be learned efficiently. Furthermore, for example, building a first machine learning model trained with material structures artificially generated through, for example, programming and a second machine learning model trained with material structures obtained through experimental measurement allows training to be performed while suppressing the scale of experimental measurement, which would involve high cost of acquisition. The algorithm in this case uses an updated learning model 41 (second machine learning model), and the data generation means can input first feature data (output of a first machine learning model) to the updated learning model 41 (second machine learning model) as input data, and output, as second feature data (output of the second machine learning model), output data obtained from the updated learning model 41 as the result of the inputting.

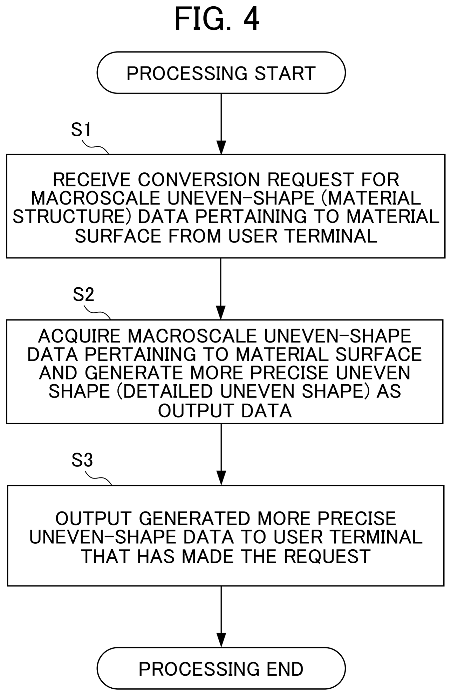

Next, descriptions are given of operations of the server by referring to the flowchart in FIG. 4. FIG. 4 is a flowchart indicating operations of the server depicted in FIGS. 2 and 3.

In step S1, the data generation unit 31 of the server 1 receives a conversion request for material structure data from the user terminal 2. For example, the material structure data includes the uneven shape of a macroscale material surface, and data obtained by measuring the uneven shape of the material surface, material structure data artificially generated through, for example, programming, and the like can be used.

Next, in step S2, the data generation unit 31 acquires macroscale uneven-shape data from the user terminal 2 or the storage unit 18, and generates data including a more precise uneven shape (detailed uneven shape) as output data. Note that, in the case of acquiring macroscale uneven-shape data from the storage unit 18, macroscale uneven-shape data obtained through measurement using an AFM or macroscale uneven-shape data artificially created through, for example, programming is stored in advance in the storage unit 18. (With respect to the artificial creation of uneven-shape data, for example, deciding on a size for a measurement region for macroscale uneven-shape data of interest, a pixel size, and a target material feature (e.g., slope in a double-logarithmic PSD graph) allows uneven-shape data to be generated with certain accuracy on the basis of given random numbers through, for example, programming.) The wording "precise uneven shape" herein means an in-principle correct or plausible uneven shape of a material surface on a narrow scale. Specifically, with respect to a statistic index indicating the features of a material and on the basis of a prescribed algorithm for generating output data (e.g., uneven-shape data more precise (detailed) than macroscale uneven-shape data) that indicates the structure of the material and indicates a better index score than input data indicating the structure of the material, first feature data (e.g., macroscale uneven-shape data) indicating the structure of a prescribed material is acquired as input data, and second feature data (e.g., uneven-shape data of which the minimum resolution is 1/4 of that of the first feature data) indicating the structure of the prescribed material is generated and output as output data. More specifically, with respect to a statistic index indicating the features of a material, the learning model 41 includes a prescribed algorithm for generating uneven-shape data that indicates a better index score than input data indicating the structure of the material and that is represented on a narrower scale than macroscale uneven-shape data (input data) indicating the structure of the material. The data generation unit 31 inputs macroscale uneven-shape data to the learning model 41 so as to generate narrow-scale (e.g., atomic-scale) uneven-shape data output from the learning model 41 as output data.

In step S3, the data generation unit 31 outputs the generated more precise uneven-shape data to the user terminal 2 that has made the request.

According to the operation example of the server 1, as noted above, more precise uneven-shape data is generated from macroscale uneven-shape data in response to a conversion request from the user terminal 2 and output to the user terminal 2, so that features represented on a scale narrower than the macroscale can be grasped.

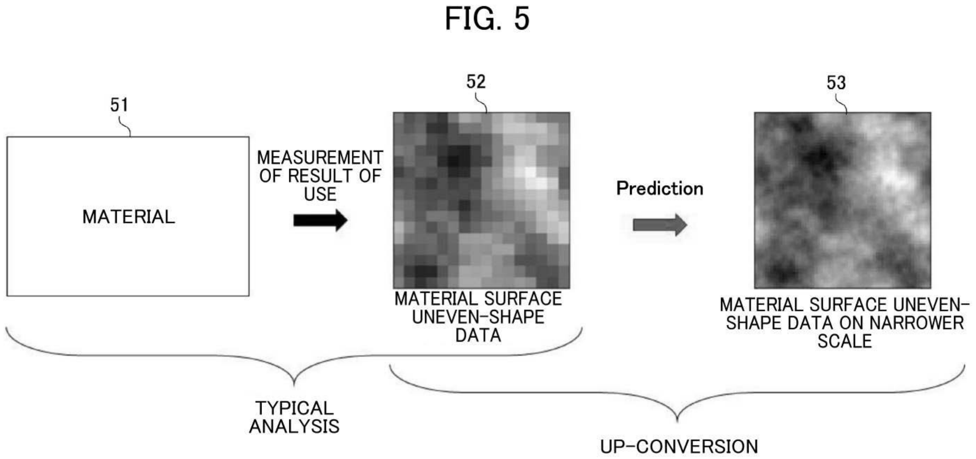

The following describes the information processing system of the present embodiment by referring to FIGS. 5 to 30. First, by referring to FIG. 5, descriptions are given of a situation in which the server in embodiments is used. FIG. 5 illustrates an example of a situation in which the server in FIGS. 2 and 3 is assumed to be used. As indicated in FIG. 5, the server 1 generates the structure of a given material 51 as a result of the manufacturing or use of, for example, an industrial equipment/device, an automobile, or a steel material. When analyzing the material 51, the server 1 measures the unevenness of the material surface of the individual specimen by using, for example, an atomic force microscope (AFM), and visualizes or quantizes the unevenness. The quality of visualization or quantization is dependent on the environment and the specification of an instrument with which measurement is performed. As a general rule, only measurement data from a measurement result of measurement with the measurement instrument, i.e., material surface uneven-shape data, can be analyzed, and it has been difficult to ensure resolving power for narrower scales, e.g., the atomic scale and minute scales close to the atomic scale. Meanwhile, although measurement can be performed using a measurement instrument such as a scanning tunnel microscope (STM) with the resolving power for the atomic scale, the measurement range will be limited, and it is difficult to observe various phenomena in situations in which the material is used. In the present embodiment, accordingly, the server 1 uses, as input, coarse-scale material surface uneven-shape data 52 obtained through measurement using the measurement instrument, thereby performing the data generation process of predicting, from the coarse-scale material surface uneven-shape data 52, data 53 on the unevenness of the material surface with resolving power higher than the resolving power for the measurement. Note that the coarse-scale material surface uneven-shape data 52 in FIG. 5 and the data 53 on the unevenness of the material surface obtained with high resolving power each indicate heights above a two-dimensional surface with the use of shading. This also applies to the following figures. Accordingly, in a case where material surface uneven-shape data is, for example, a two-dimensional image, low-resolution feature data may be input to the server 1 so as to output high-resolution feature data from the server 1.

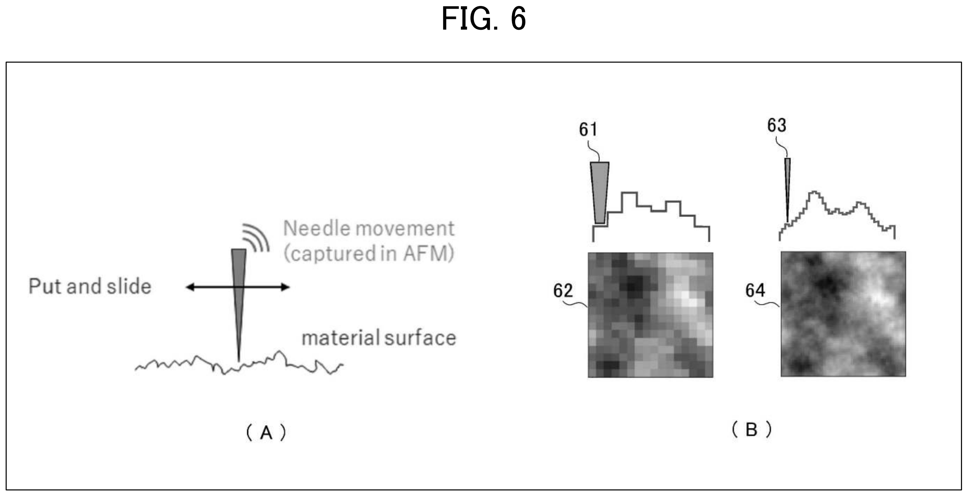

Next, descriptions are given of a measurement outline for an atomic force microscope (AFM) by referring to FIG. 6. FIG. 6 illustrates a measurement outline for, for example, an atomic force microscope (AFM) serving as a measurement instrument for inputting measurement data to the server in FIGS. 2 and 3. Measurement devices for measuring a material structure include, for example, scanning probe microscopes, and FIG. 6(A) indicates a measurement principle of an atomic force microscope (AFM), i.e., a type of scanning probe microscope. The AFM measures the unevenness of a surface by sensing a stress received when a needle-shaped tip (probe) hits, or is brought into contact with, the vicinity of the material surface, or by sensing a deformation that occurs in the tip or a cantilever coupled to the tip due to an interatomic force while the tip is not in contact. As indicated in FIG. 6(B), in a case where a tip 61 having a thick leading end is used (including a situation in which a worn tip is used), or in a case where the operation pitch size of the tip is large, the unevenness is scanned at long intervals, and when, for example, two-dimensional data is measured, a rendered image 62 with coarse pixels will be provided. In a case where a tip 63 having a thin leading end is used, or in a case where the operation pitch size of the tip is small, the unevenness is scanned at short intervals, and when, for example, two-dimensional data is measured, a rendered image 64 with fine pixels will be provided. For example, a non-patent document of "Surf. Topogr.: Metrol. Prop. 5 (2017) 013001" discloses such techniques pertaining to a scanning probe microscope. The non-patent document reports wear of a tip and the influence thereof, and indicates that using a tip that has become deteriorated through measurements may lead to incorrect understanding of a measurement result. The non-patent document also indicates that using an unworn thin tip does not necessarily allow for accurate measurement, due to, for example, the bottom of the surface unevenness being not reached.

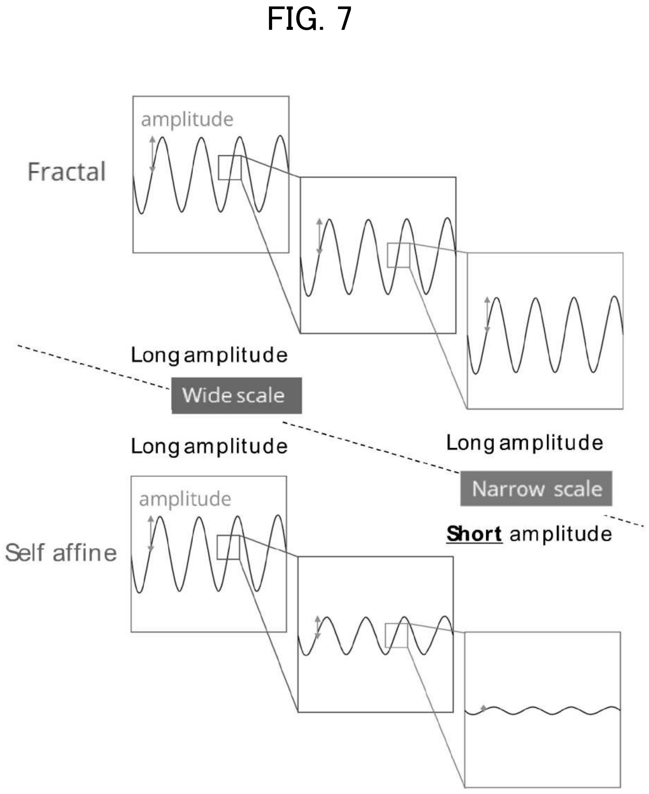

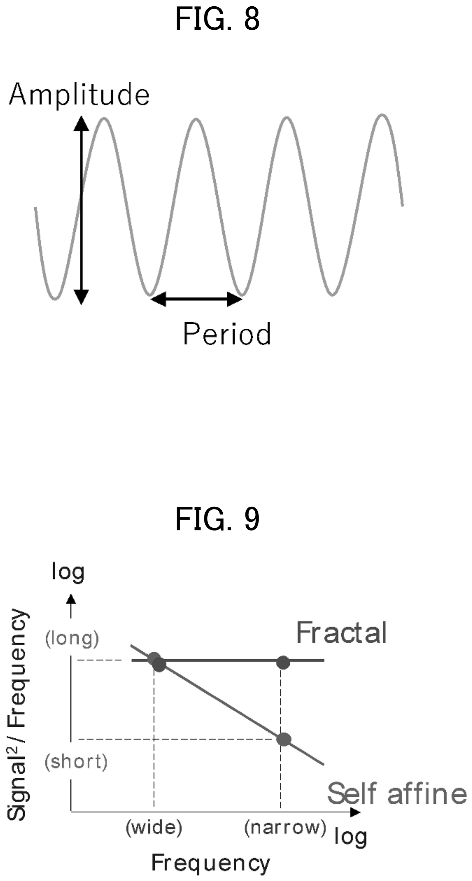

The following describes self-affinity by referring to FIGS. 7 and 8. FIG. 7 illustrates fractal graphs and self-affine graphs for an example of the uneven shape of a material surface. FIG. 8 illustrates an amplitude and a period with which, when quantifying the unevenness of a material surface, it is examined what type of waveform component can be used to build the unevenness.

As depicted in FIG. 7, the fractal graphs indicate equivalent amplitudes with respect to scale between a situation in which unevenness is observed on a wide scale and a situation in which the unevenness is observed on a narrower scale. Meanwhile, in the self-affinity graphs, the amplitudes specific to a wide scale and a narrow scale are not limited to being equivalent but have a correlation therebetween, and for example, the amplitude with respect to the scale may decrease proportionally in the direction from a wide scale toward a narrow scale. When quantifying the unevenness of a material surface, it is examined what type of waveform component can be used to build the unevenness. Various frequencies are considered to be waveform components, and, for example, periods and amplitudes are defined as indicated in FIG. 8. On the basis of these factors, energy per unit length can be determined with respect to the magnitude of the frequency (1/period). This index is referred to as a power spectral density (PSD), which can be represented using, for example, a line graph with the frequency being indicated on the horizontal axis and the power with respect to the magnitude of the frequency ($Signal^2$/Frequency) being indicated on the vertical axis, as indicated in FIG. 9. In this example, a double-logarithmic graph is presented as an example of the line graph. In other words, frequency components can be analyzed in the space domain by using the PSD.

FIG. 9 illustrates an example in which individual PSDs are indicated for fractal and self-affinity by using line graphs. As indicated in FIG. 9, the line graph for fractal exhibits a constant PSD on the vertical axis irrespective of the frequency on the horizontal axis. The line graph for self-affinity exhibits a PSD that decreases as the frequency decreases, and, according to the tendency, it can be said that a proportional relationship is achieved when logarithmic plotting is performed for both the vertical axis and the horizontal axis.

Next, descriptions are given of the relationship between the server and the PSD in the present embodiment by referring to FIGS. 10 and 11. FIG. 10 indicates a measurement image of the uneven shape of a typical material surface, and a double-logarithmic graph indicating the PSD of the measurement image. FIG. 11 indicates a measurement image of the uneven shape of a material surface, and a double-logarithmic graph indicating the PSD of the measurement image, the measurement image being obtained when the resolution of measurement is higher than that of the measurement in FIG. 10 (when a thin tip used). When the measurement image in FIG. 10 is measured, the amount of information included in given material surface uneven-shape data is determined by the pixel size and the size of two-dimensional data, and a proportional relationship is detected only in a certain range of the PSD. Meanwhile, as indicated by the measurement image in FIG. 11, a smaller pixel size leads to an increase in the amount of information included in material surface unevenness data. More specifically, when it is examined what type of waveform component can be used to build the unevenness, fine waveform components are also detected because of high resolution. Thus, plots can be added for the PSD in regions with low frequencies. In this example, in a case where the waveform components are represented using a line segment on the assumption that plots are linked on a graph, if the resolution is high, the waveform components can be represented by the line (proportional relationship) indicating the uneven shape of a typical material surface depicted in FIG. 10, and can also be represented by the line graph in FIG. 11 with a line segment 101 that is an extension of the line in FIG. 10 in a downward-right direction.

In view of the relationship between the line graphs in FIGS. 10 and 11, with respect to a statistic index indicating the features of a material, for example, a "material-structure power spectral density" can be used as a statistic index for the algorithm of the learning model 41 for generating output data that indicates the structure of the material and indicates a better index score than input data indicating the structure of the material, thereby generating and outputting feature data having a "material-structure power spectral density" closer to a theoretical value than that of the original feature data is. A double-logarithmic approximate line (straight line) of power spectral density may be used as a theoretical value for the "material-structure power spectral density". In case examples in which a straight line is employed as an approximate line while a good index score is achieved, a "material-structure power spectral density" indicated by given data is close to the slope of a straight line considered to be a theoretical value for the material, and, for example, a "material-structure power spectral density" indicated by given data is close to the section of a straight line (length of the region of the straight line) considered to be a theoretical value for the material.

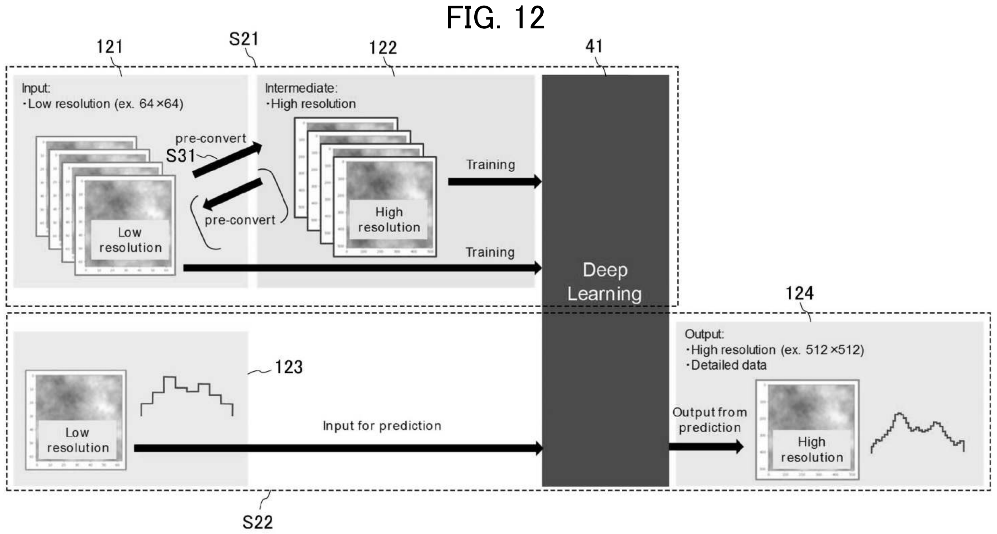

Next, descriptions are given of how the learning model is used by referring to FIG. 12. FIG. 12 illustrates an example of use of the learning model with respect to a server in the present embodiment. As indicated in FIG. 12, the learning model 41 is used in two steps, namely, training step S21 and inference step S22. In training step S21, the learning model 41 is trained using input data 121 and intermediate data 122. In inference step S22, inference is performed using input data 123 and a learning model 41 obtained as a result of training, and output data 124 can be obtained as an inference result. In training step S21, initially, input data 121 is input. The input data 121 is low-resolution data.

Training step S21 includes conversion step S31 (pre-conversion). In conversion step S31, the input low-resolution data is converted into high-resolution data constituting intermediate data 122. This conversion process may also be the procedure of initially preparing intermediate high-resolution data, and then obtaining input low-resolution data in conversion step S31.

Next, the learning model 41 is trained through deep learning with the input data 121 and the intermediate data 122 (the model is updated through training). As a result, the learning model 41 can be trained for the process of conversion from low-resolution data to high-resolution data, i.e., a data generation step of generating minute-scale material surface uneven-shape data.

The input data 121 to be used for training preferably includes one or more pieces of measurement data (e.g., one or more images), and more preferably includes a multitude of (e.g., several tens to several tens of thousands) pieces of measurement data. For a single piece of data, the entirety of the range of the data obtained through measurement does not necessarily need to be used, but portions of the data may be used. Use of different sites of a single piece of data can provide a data amount equivalent to a plurality of images. In deep learning, a scheme is preferable in which training can be performed with features of data, and, for example, a generative adversarial network (GAN) can be used.

In inference step S22, initially, one piece of low-resolution data is input to the trained learning model 41 as input data 123. The learning model 41 converts the input data 123 into high-resolution data and outputs the same. Applying the learning model 41, which has been trained for the process of generating minute-scale material surface unevenness, to given low-resolution data causes the minute-scale material surface unevenness to be added to the low-resolution data, thereby outputting the resultant data in the form of high-resolution data. For the purpose of, for example, facilitating the avoidance of over-training pertaining to improvement in the resolution of local unevenness, the low-resolution data in this situation is, in principle, assumed to be one not used in training step S21. However, said data may also be the one used in training step S21.

In this process, data to be used as input in inference step S22 may be analyzed in advance, and a multitude of pieces of data similar to the analyzed data (essentially equivalent thereto but differing therefrom in terms of random number) may be artificially produced and used for training.

For example, the surface of a certain ceramic may be measured using an AFM, a slope in a double-logarithmic PSD graph may be calculated from the measurement result, and new data matching the slope may be generated using, for example, a program. Alternatively, documents or the like pertaining to material properties may be referred to, and new data matching desired features may be generated using, for example, a program. In this method, the number of pieces of training data can be increased while the number of times measurement is performed is decreased, and the accuracy in machine learning can be improved.

Training step S21 may be performed using a function of training with known low-resolution data for the process of generating minute-scale material surface unevenness. Inference step S22 may be performed using a function for applying a given learning model 41 that has been built to given low-resolution data.

In a basic method for use, accordingly, the size of input data and the size of output data are set to be suitable for the outputs and inputs in training step S21 and inference step S22. However, the input data size and the output data size do not necessarily need to match each other, e.g., training step S21 is performed within the range from $64 \times 64$ pixels to $512 \times 512$ pixels, inference step S22 is performed within the range from $128 \times 128$ pixels to $1024 \times 1024$ pixels.

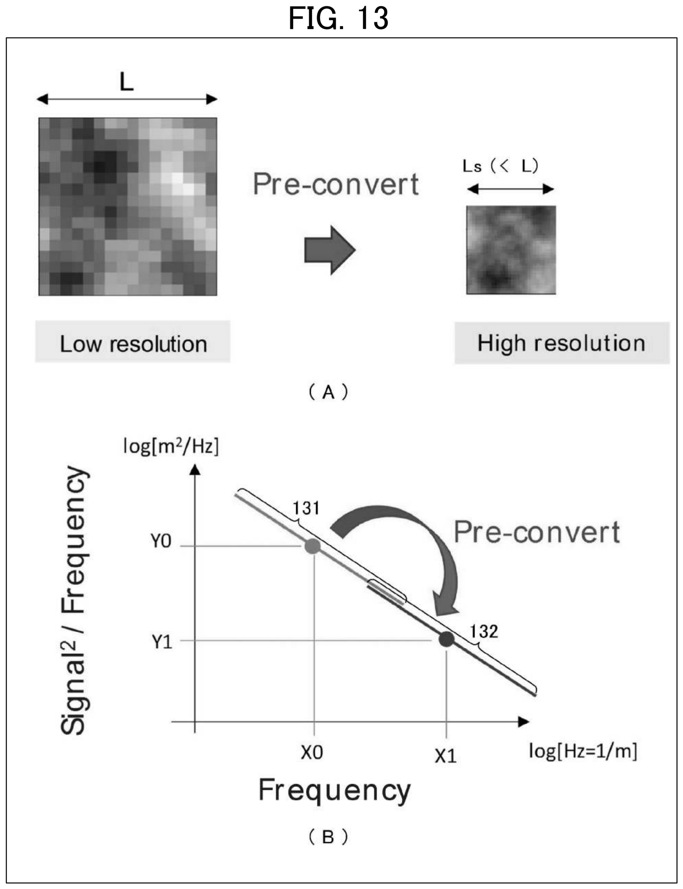

The following describes the conversion step (pre-conversion) by referring to FIG. 13. FIG. 13 illustrates a conversion step of converting low-resolution data into high-resolution data with respect to the server in the present embodiment. In this case, under restrictions separately set, intermediate high-resolution data can be generated on the basis of input low-resolution data. In the PSD graph, input data, which is low-resolution data having a data size L, corresponds to a line 131 on the upper-left portion of the plot, and mock-up high-resolution data having a data size Ls corresponds to a line 132 in the lower-right portion of the graph.

The restrictions pertain to two factors, e.g., the slope of the double-logarithmic PSD plot, and a pixel conversion scale (e.g., 1/4 when $1 \times 1$ pixel of input data is converted into $4 \times 4$ pixels of output data). The slope of the double-logarithmic plot indicates a "material surface unevenness size corresponding to resolving power magnitude". In particular, setting a pixel conversion scale allows the size of material surface unevenness provided when input data is converted into data having a different pixel size to be scaled and calculated as a value conforming to self-affinity. With respect to the calculation of the restrictions, an example of a calculation method that can be used by the server 1 is one that involves scaling data before conversion and data after conversion on the assumption that the PSD ($C^{2D}$) of a two-dimensional image satisfies $C^{2D} \propto h^2 A^{-1}$, where h is the height of unevenness, and A is an area of interest (non-patent document "ACS Appl. Mater. Interfaces 10, (2018) 29169").

Specifically, where the slope of the double-logarithmic PSD plot is a=-2.55, the pixel conversion scale is b=1/4, and the variable names before conversion and after conversion are "before" and "after," the following equation is satisfied.

$$\text{Equation (1): } C^{2D}{}_{after} \propto h_{after}{}^2 A_{after}{}^{-1} = h_{after}{}^2 (b^2{}^* A_{before})^{-1}$$

Left side of equation (1): The relationship between $C^{2D}{}_{after}$ and $C^{2D}{}_{before}$ on the double-logarithmic plot is $\log(C^{2D}{}_{after}) = \log(C^{2D}{}_{before}) + a^*(\log(1/b))$ by means of $\log(C^{2D}{}_{after})$ and $\log(C^{2D}{}_{before})$, and when $a^*(\log(b)) = (-2.55)^*(0.602\cdots) \approx -1.535$ is used, the following equation is satisfied.

$$\text{Equation (2): } C^{2D}{}_{after} \approx (1/10^{1.535}) C^{2D}{}_{before} = 0.02917 C^{2D}{}_{before}$$

$$\text{Right side of equation (1): } h_{after}{}^2 (b^2{}^* A_{before})^{-1} = 16 h_{after}{}^2 A_{before}{}^{-1},$$

which is defined as equation (3).

$$\text{Equation (2) = equation (3): } 0.02917 C^{2D}{}_{before} = 16 h_{after}{}^2 A_{before}{}^{-1},$$

such that
through a comparison between $C^{2D}{}_{before} = 548.5 h_{after}{}^2 A_{before}{}^{-1}$ and $C^{2D}{}_{before} = h_{before}{}^2 A_{before}{}^{-1}$, $548.5 h_{after}{}^2 = h_{before}{}^2$ is satisfied, and assuming that h>0, $h_{after} = 0.04270 h_{before}$ is satisfied, so the unevenness is scaled by a factor of 0.04270.

An index corresponding to a restriction pertaining to, for example, a value in the middle of the above calculation process may be received by the server 1 through a manual input or may be calculated from input data. When calculating the slope of a double-logarithmic PSD plot from input data, a method or the like may be employed that involves initially producing a double-logarithmic PSD plot for the input data, determining an approximate straight line by using, for example, the least-squares method, and calculating the slope of the approximate straight line.

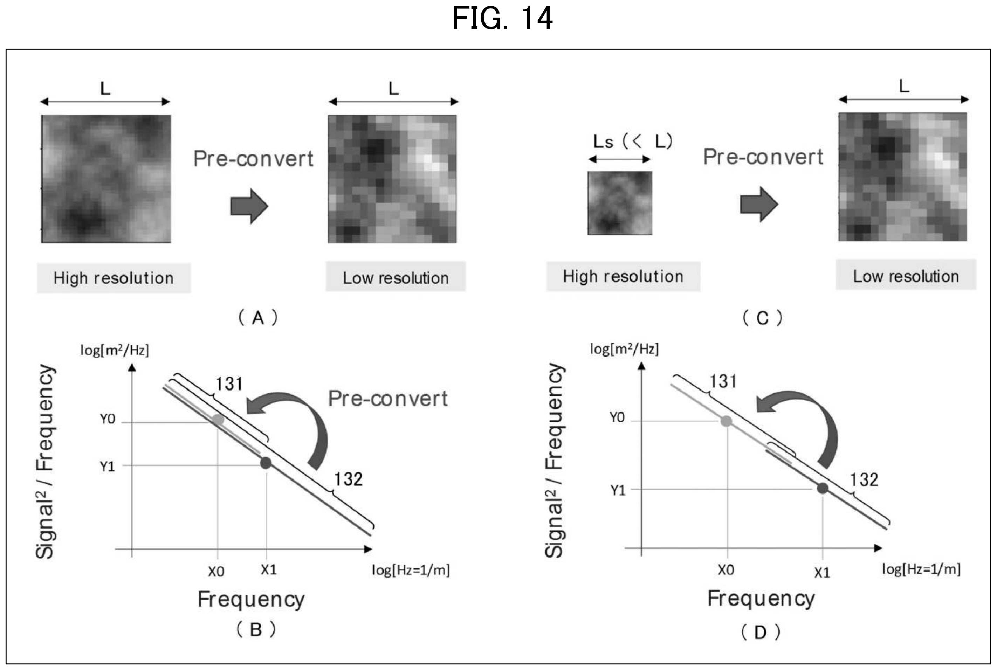

FIG. 14 illustrates a conversion step of converting high-resolution data into low-resolution data with respect to the server in the present embodiment with reference to a situation in which the conversion step (pre-conversion) is performed using a procedure that is the reverse of the procedure in FIG. 13. In this case, input low-resolution data can be generated from intermediate high-resolution data prepared in advance by using a method typically used for, for example, image processing. For example, the nearest neighbor algorithm or the like may be used as the method used for, for example, image processing. In a case where the nearest neighbor algorithm is used, when the pixel conversion scale is 4, 4×4 pixels of high-resolution data prepared in advance can be converted into 1×1 pixel, thereby producing low-resolution data, i.e., input data (see FIGS. 14(A) and 14(B)). Meanwhile, for example, the image size of known high-resolution data can be virtually increased in the real space, and the scale for the increase in size in the real space can be determined using a calculation procedure that is the reverse of that in FIG. 13, thereby generating low-resolution data (see FIGS. 14(C) and 14(D)).

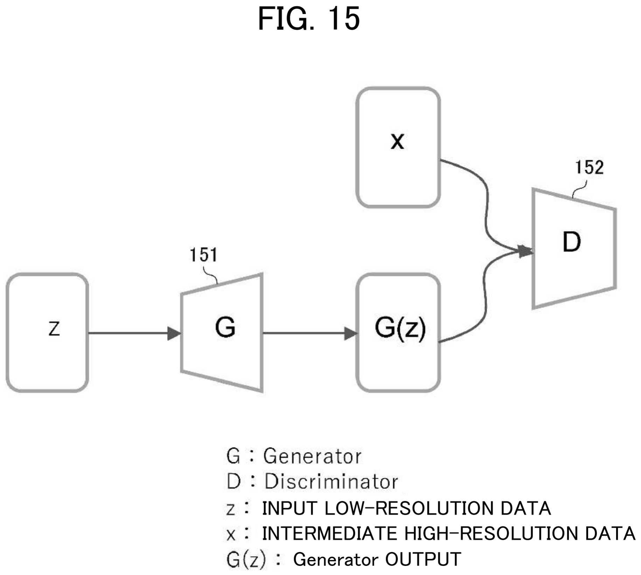

The following describes a deep learning function included in the training unit by referring to FIG. 15. FIG. 15 illustrates an example of the configuration of the deep learning function of a learning model built by the training unit.

As depicted in FIG. 15, the deep learning function of the learning model built by the training unit includes a generator 151(G) and a discriminator 152(D). When a GAN is used for the deep learning, input low-resolution data is input to the generator 151(G), and the output of the generator 151(G) and intermediate high-resolution data are input to the discriminator 152(D).

For example, in a case where the input data is 64×64 pixels and the final output data is 512×512 pixels, the input data is initially received, and the input data is converted into 512×512 pixels and input to the generator 151(G). For the conversion in this case, bilinear interpolation, bicubic interpolation, nearest neighbor interpolation, or the like may be performed, or 1×1 pixel of the 64×64-pixel image may be simply copied over 8×8 pixels of the 512×512 pixels.

The generator 151(G) generates mock-up high-resolution data from the input of 512×512 pixels on the basis of given processing, and outputs the same in the form of 512×512 pixels. In this step, the 512×512 pixels of data, which contains the same values as, or close values to, the 64×64 pixels of input data, are rewritten into 512×512 pixels of data differing from the input data. The output of the generator 151(G) is input to the discriminator 152(D) together with the intermediate high-resolution data (512×512 pixels) indicated in FIGS. 12 to 14.

On the basis of given processing, the discriminator 152(D) compares the output of the generator 151(G) with the intermediate high-resolution data and outputs the matching property between the two. In consideration of the result of the matching property, training is repeatedly performed in accordance with the epoch number such that: the generator 151(G) outputs mock-up high-resolution data that matches the intermediate high-resolution data to a greater degree; and the discriminator 152(D) more accurately compares the two pieces of data so that the mock-up high-resolution data can be identified.

Through the processes noted above, the generator 151(G) is trained for the process of converting the input low-resolution data (64×64 pixels) into 512×512 pixels of data, which has a higher resolution.

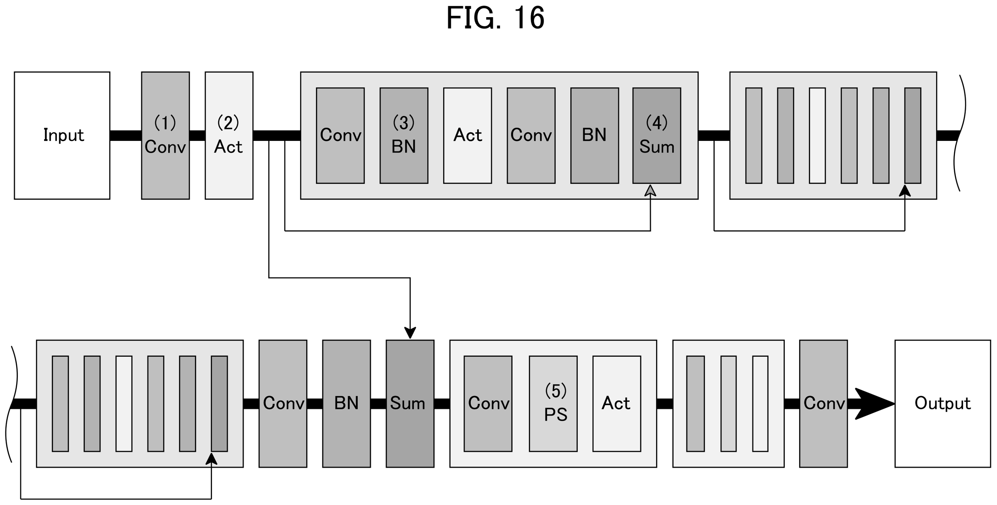

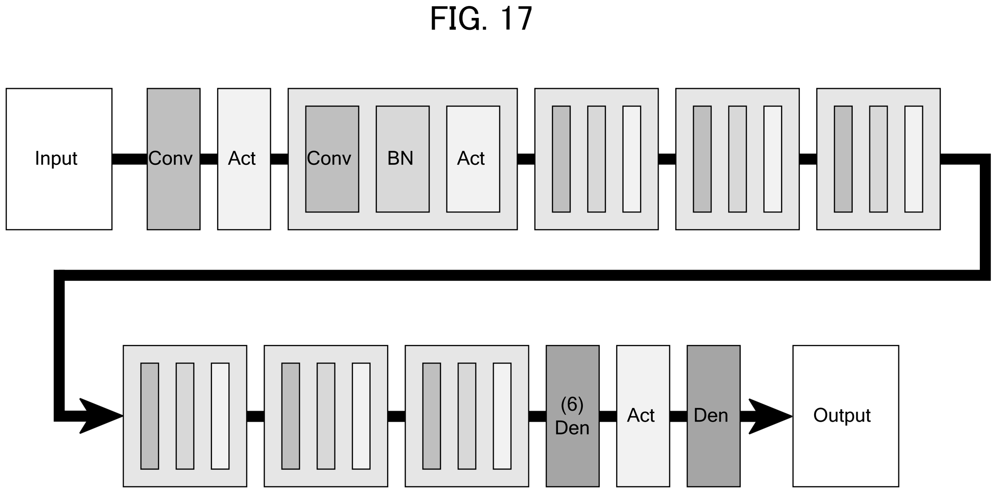

Now, descriptions are given of configuration examples of the generator (G) and the discriminator (D) by referring to FIGS. 16 and 17. FIG. 16 illustrates an example of the configuration of the generator (G) of the learning model in FIG. 15. FIG. 17 illustrates an example of the configuration of the discriminator (D) of the learning model in FIG. 15.

A publicly known or unique learning model obtained by combining processes such as convolution can be used for the generator (G) depicted in FIG. 16 and the discriminator (D) depicted in FIG. 17. For example, the generator 151(G) and the discriminator 152(D) can be formed by combining the processes of convolution (Conv), activation (Act), batch normalization (BN), summation (Sum), pixel shuffle (PS), and dense (Den).

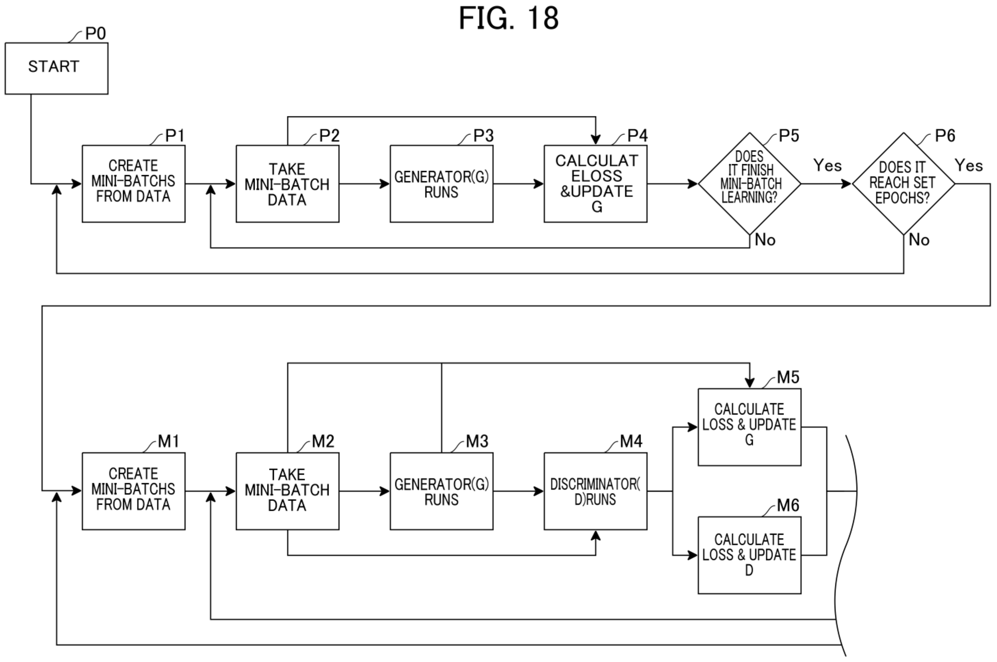

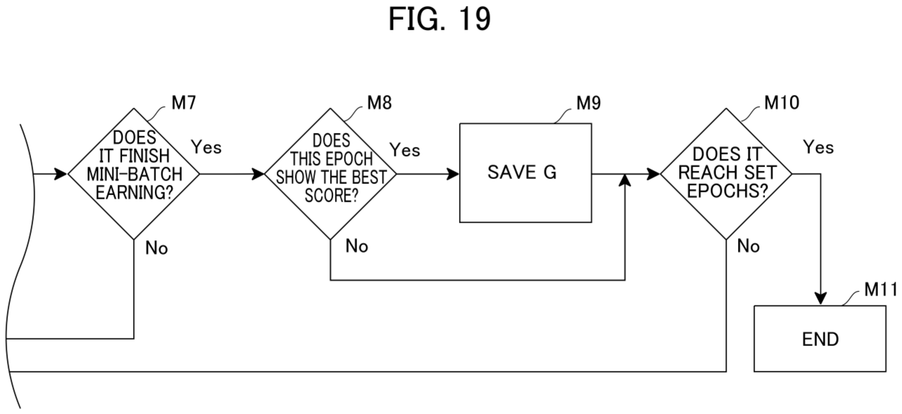

The following describes operations of the generator 151(G) and the discriminator 152(D) by referring to FIGS. 18 to 20. First, descriptions are given of a training process for the learning model by referring to the flowcharts in FIGS. 18 and 19. FIG. 18 is a flowchart (example 1) indicating a training process for the generator 151(G) in FIG. 16 and the discriminator 152(D) in FIG. 17. FIG. 19 is a flowchart (example 2) indicating a training process for the generator 151(G) in FIG. 16 and the discriminator 152(D) in FIG. 17.

In step P0, operations are started, and a data set is read. In step P1, a mini-batch is generated from the data set. In step P2, the generator 151(G) reads data on the mini-batch. In step P3, the generator 151(G) generates mock-up high-resolution data. In step P4, a loss function is calculated, and the generator 151(G) is updated. In step P5, it is determined whether an upper limit for the mini-batch has been reached. In view of the result of the determination, the flow shifts to step P6 when the upper limit for the mini-batch has been reached, and the flow shifts to step P2 when the upper limit for the mini-batch has not been reached. In step P6, the generator 151(G) decides whether an epoch number that has been set has been reached. In view of the result of the decision, the flow shifts to step M1 when the epoch number that has been set has been reached, and the flow shifts to step P1 when the epoch number has not been reached.

In step M1, a mini-batch is generated from the data set. In step M2, data on the generated mini-batch is read. In step M3, the generator 151(G) performs the process of generating mock-up high-resolution data by using the read mini-batch. In step M4, the process of comparison determination for the high-resolution data generated by the discriminator 152(D) and known high-resolution data (intermediate high-resolution data) is performed. In step M5, a loss function is calculated, and the generator 151(G) is updated. In step M6, a loss function is calculated, and the discriminator 152(D) is updated. In step M7, it is determined whether an upper limit for the mini-batch has been reached. In view of the result of the determination, the flow shifts to step M8 when the upper limit for the mini-batch has been reached, and the flow shifts to step M2 when the upper limit for the mini-batch has not been reached. In step M8, it is decided whether a best score has been derived with respect to a given index. In view of the result of the decision, the flow shifts to step M9 when a best score has been derived with respect to a given index, and the flow shifts to step M10 when a best score has not been derived with respect to the given index. In step M9, the generator 151(G) is stored. In step M10, it is decided whether the epoch number that has been set has been reached. In view of the result of the decision, the flow shifts to step M11 when the epoch number that has been set has been reached, and the flow shifts to step M1 when the epoch number has not been reached. In step M11, the operations end.

The number of pieces of data in the data set has a relationship of "(number of pieces of data/batch size)=number of mini-batches". The number of pieces of data and the batch size may be set to any scale. However, the number of pieces of data is preferably 1,000 or greater, and more preferably 5,000 or greater in order to improve the accuracy of the learning model 41, and the batch size is preferably 8 to 64, and more preferably 16 to 32 in order to facilitate the improvement in both the learning speed and the accuracy of the learning model 41. The epoch number may be set to any scale, but is preferably 50 or greater, and more preferably 100 or greater in order to improve the accuracy of the learning model 41.

With respect to the loss function of the generator 151(G) in steps P4 and M5, a loss function based on a comparison between two arbitrary images can be used, and an available loss is, for example, a mean absolute error MAE, a mean square error MSE, a binary cross-entropy on pixel-by-pixel basis, a content loss/style loss, an edge loss, a loss based on an index (e.g., local slope) pertaining to a material, or a loss based on an index (e.g., PSNR, SSIM) generally used for, for example, image processing. When a GAN is used, an adversarial loss can be used. Each single one of these losses may be used as a loss function, or a combination of ones of the losses may be used as a loss function.

In step M6, for the loss function of the discriminator 152(D), a loss function generally used for a GAN may be used, or a loss function such as binary cross entropy may be used.

In step M8, in order to reduce a calculation load pertaining to training and allow more likely high-resolution data to be output, a method can be applied that involves extracting a result and a learning model 41 from a training stage in which preferable results are indicated with respect to a given index, from among a multitude of repetitions. The given index may be any of, for example: an index pertaining to deep learning (e.g., value of a loss); an index pertaining to the tendency of a PSD graph (e.g., amount of change in the PSD that is made during a period from the start to end of training); an index pertaining to local material surface unevenness (e.g., mean square error in a contour line in a specific site between moments before and after training); an index (e.g., PSNR, SSIM) generally used for, for example, image processing; and an index pertaining to the accuracy of the learning model 41 with respect to the server 1 (e.g., pixel boundary residue in an original low-resolution image).

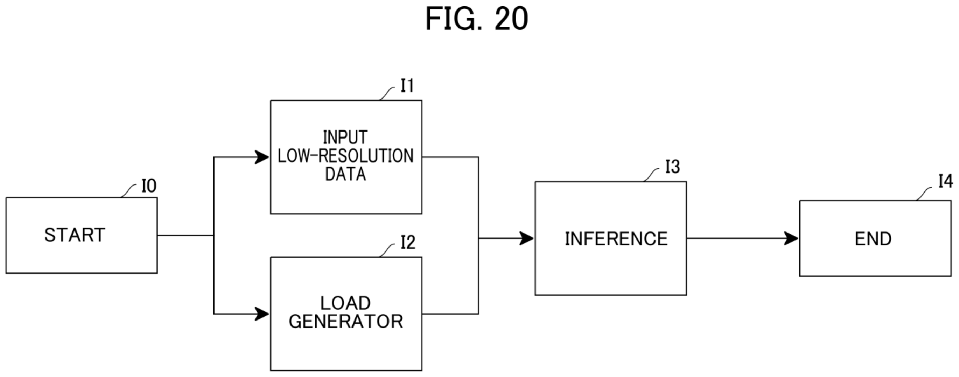

Next, descriptions are given of an inference process performed by the discriminator by referring to the flowchart in FIG. 20. FIG. 20 is a flowchart indicating an inference process in which the generator 151(G) in FIG. 16 is used. Step 10 indicates an operation start. In step 11, data of interest is read. In step 12, a generator 151(G) created in advance is read. In step 13, high-resolution data is predicted (estimated) using the read data and output. Step I4 indicates an operation end.

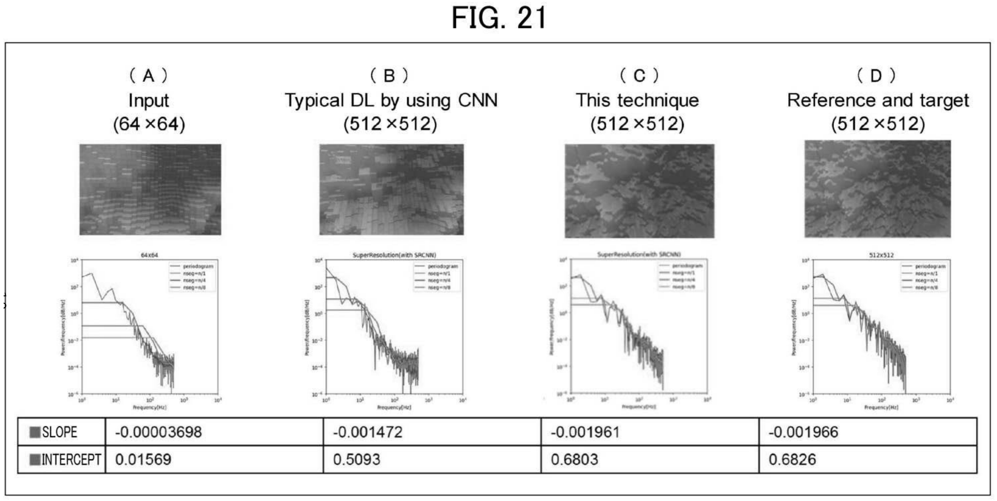

Next, by referring to FIG. 21, descriptions are given of a specific example in which the resolution of a measurement image is changed (image quality is improved). FIG. 21 illustrates an example in which the learning model in FIG. 15 generates 512×512 pixels of output data from 64×64 pixels of input data.

An attempt was made to provide an output relying on deep learning from the 64×64 pixels of input data indicated in FIG. 21(A). FIG. 21(D) indicates a high-resolution version of input data (512×512 pixels), which is to be compared in terms of output result.

FIG. 21(D) indicates a situation in which ideal two-dimensional data conforming to the self-affinity law is prepared. FIG. 21(A) indicates a resolution reduced in comparison with FIG. 21(D). Both were used as ones corresponding to measurement data.

FIG. 21(B) indicates an example of a result of performing training based on a CNN, which is a typical deep learning scheme. The trend of the PSD exhibited a close tendency to input data, and did not show a similarity to the high-resolution version data.

FIG. 21(C) indicates an example of a result based on a GAN (at least an adversarial loss was used) with respect to the server 1, and it can be found that the trend of the PSD exhibits a similar tendency to the high-resolution version data. In particular, the numerical value in the comparative example in FIG. 21(D) is -0.001966, while the numerical value in FIG. 21(C) (server in the present embodiment) is -0.001961, so, when the slopes of the double-logarithmic PSD plots are compared, it is found that the two values are close to each other.

A publicly known method may be used as a method for plotting a PSD according to two-dimensional data on material surface unevenness, and for example, the periodogram method or Welch's method may be used. In the above-noted figures, plots are created for four cases of: the periodogram method; and Welch's method with a segment division parameter being considered for three cases. For the calculation of the slopes of plots, estimated data was used that is based on Welch's method with a segment division parameter of n/8, where the output pixel size is n, and equations of straight lines were determined through least squares approximation excluding the zero point.

According to the examples noted above, with respect to output, one or more indexes from among, for example, an increase in the resolution of material unevenness (material-structure data amount per unit space), an increase in the PSD matching property (whether the property is close to a target property such as straight line), and a decrease in a PSD error (whether an error from a target property such as straight line is small) can be used as indexes indicating a better result than input.

Next, descriptions are given of an accuracy improvement achieved by repeating processing by referring to FIG. 22. FIG. 22 illustrates improvement in prediction accuracy with respect to a first prediction, a second prediction, and following predictions.

The server 1 in embodiments can improve the resolution of material surface uneven-shape data at a given scale ratio by performing up-conversion processing once, but cannot necessarily improve the resolution up to the atomic scale for the real material.

Accordingly, as indicated in FIG. 22, the up-conversion processing can be performed repeatedly a plurality of times by using output results up to the previous process (first prediction) as input data for the second process (second prediction) and the following processes, and, in particular, the prediction processing for resolution improvement can be performed a multitude of times, thereby providing more-minute-scale feature data (extended straight line in the line graph to the right of the arrow in FIG. 22) as a prediction result. For example, in a case where 64×64 pixels of input data (1×1 pixel=50 nanometers square) obtained through measurement using an AFM are converted into an output of 512×512 pixels in the first prediction, the output is 1×1 pixel=50/(512/64)=6.25 nanometers square. In a case where 64×64 pixels of input data (1×1 pixel=6.25 nanometers square) are converted into an output of 512×512 pixels in the second prediction, the output is 1×1 pixel=6.25/(512/64)≈0.8 nanometers square. In a case where 64×64 pixels of input data (1×1 pixel=0.8 nanometers square) are converted into an output of 512×512 pixels in the third prediction, the output is 1×1 pixel=0.8/(512/64)=0.1 nanometers square. This scale is comparable to, for example, the bonding distance between the carbon atoms of graphene or diamond of 0.14 to 0.16 nanometers, i.e., atomic scale.

By referring to FIGS. 23 to 25, the following describes some examples (first to third cases) in which complementing processing is performed when a measurement image of interest is measurement data that has been subjected to decimation. First, by referring to FIG. 23, descriptions are given of a first case in which complementing processing is performed when a measurement image of interest is measurement data that has been subjected to decimation. FIG. 23 illustrates, with respect to the server in embodiments, a first case in which complementing processing is performed when a measurement image of interest is measurement data that has been subjected to decimation. In a case where input data is, for example, measurement data that has been arbitrarily subjected to decimation (measurement image 231 depicted in FIG. 23), the data generation unit 31 performs complementing processing on the measurement data and outputs complemented data 232.

For example, assuming that the measurement image 231 (two-dimensional image data) depicted in FIG. 23 is obtained by scanning with the tip (probe) of a measurement instrument vertically and horizontally at equal intervals, decimating horizontal scan pitches will cause data loss. In this case, the data generation unit 31 is operated to recover the data loss. In order to facilitate the understanding of descriptions, an image 233 is provided that indicates the measurement image 231 depicted in FIG. 23 with white quadrangular pixels representing unknown data, and non-white quadrangular pixels representing known data.

The image 233, from which half of the pieces of data have been decimated in the horizontal direction, can be converted into low-resolution data 234 without decimation by being subjected to image quality lowering processing. With reference to this case, the noted conversion can be implemented through a process of converting $2 \times 2$ pixels into $1 \times 1$ pixel, and when doing so, one or both of the two pieces of known data of the $2 \times 2$ pixels can be used.

Using the low-resolution data 234 without decimation for input to the data generation unit 31 causes the data generation unit 31 to improve the image quality of (up-convert) the low-resolution data 234, with the result that high-resolution data 235 is output. This process corresponds to generating data to fill up decimated sites of the original measurement data so as to offset the decimated sites.

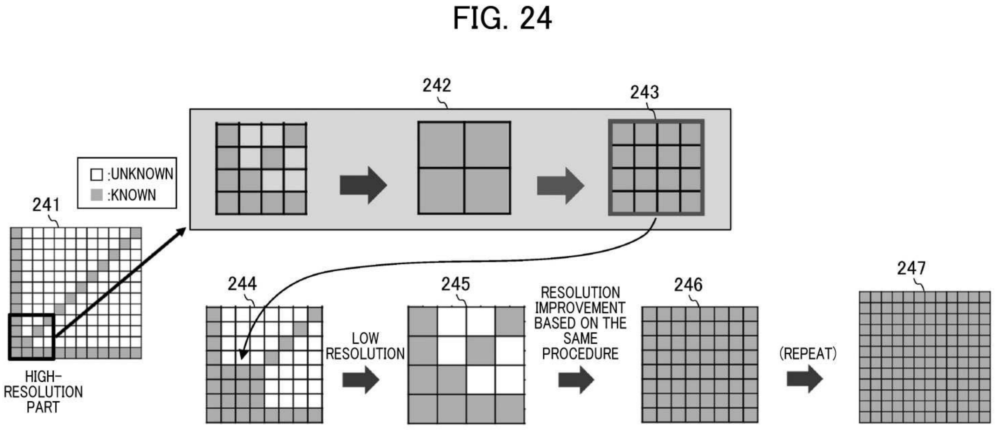

Next, by referring to FIG. 24, descriptions are given of a second case in which complementing processing is performed when a measurement image of interest is measurement data that has been subjected to decimation and in which known sites and unknown sites coexist. FIG. 24 illustrates, with respect to the server in embodiments, a second case in which complementing processing is performed when a measurement image of interest is measurement data that has been subjected to decimation and in which known sites and unknown sites coexist. A known site and an unknown site can be distinguished from each other according to whether measured data is present (whether data is lost) in a partial range in the image.

In a case where input data is, for example, two-dimensional measurement data (image 241 of $12 \times 12$ pixels depicted in FIG. 24) that has been obtained through three scanning operations in the vertical, horizontal, and diagonal directions, the data generation unit 31 performs complementing processing on the measurement image and outputs complemented data 247. In this case, when an image ($4 \times 4$ pixels) of a lower-left high-resolution part that is located in the measurement image 241 and for which a relatively large amount of pixel data has been obtained is focused on, it is found that complemented data 243 for the entirety of the focused-on site can be obtained through a process 242 of converting $2 \times 2$ pixels into $1 \times 1$ pixel.

By using such data that has been subjected to the process for resolution reduction, predicted data can be obtained for the entirety of the focused-on site on the basis of the original resolution. Specifically, applying the complemented data 243 to the original measurement image 241 allows new data 244 to be generated for $8 \times 8$ pixels. The $8 \times 8$ pixels can be subjected to resolution reduction into $4 \times 4$ pixels through the process of converting each $2 \times 2$-pixel portion into a $1 \times 1$ pixel, thereby providing data 245. The resolution of the data 245 can be improved using the same procedure as the one noted above. $8 \times 8$ pixels of predicted data 246 are obtained as an output resulting from performing the up-conversion processing again.

Repeating the manipulation noted above a given number of times makes it possible to eventually generate data 247 that is the original two-dimensional measurement data of interest with the entirety thereof having been complemented. In the examples noted above, with respect to output, an index pertaining to the fact about whether a lost data amount per unit space has been decreased in comparison with input can be used as an index indicating a better result than input, besides the standpoints noted above.

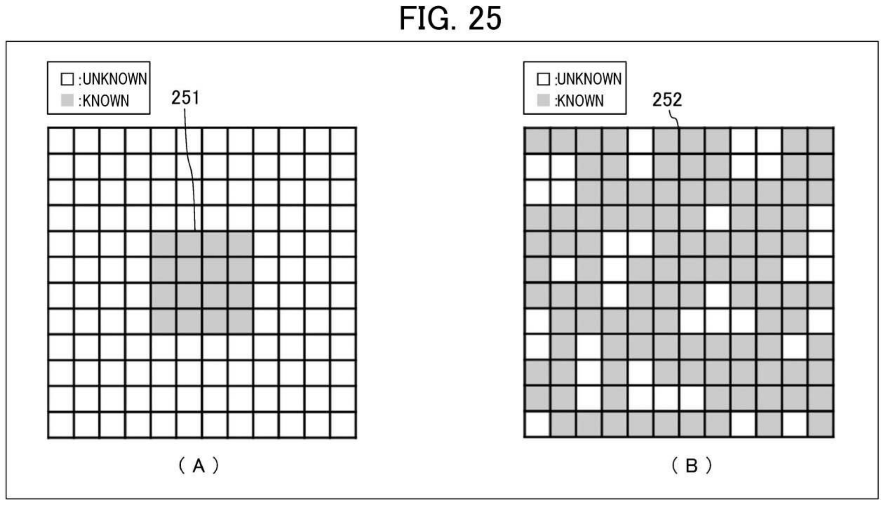

Next, by referring to FIG. 25, descriptions are given of a third case in which a measurement data range is enlarged as an exceptional example pertaining to measurement data in which known sites and unknown sites coexist. FIG. 25 illustrates a third case in which a measurement data range is enlarged for an exceptional example of measurement data in which known sites and unknown sites coexist. Measurement data 251 is present that has a small measurement area as indicated by non-white sections in FIG. 25(A). When complementing the surface surrounding the measurement data 251 with material surface uneven-shape data, complementing processing can be performed using a procedure similar to the one described above so as to generate material surface uneven-shape data in which the surrounding surface has been complemented. Furthermore, measurement data 252, portions (pixel units) of which have been lost as indicated in FIG. 25(B), can be subjected to the process of complementing for the lost sites by using a procedure similar to the one noted above, thereby generating material surface uneven-shape data for which the lost sites have been recovered.

In the first to third cases noted above, a learning model 41 having an algorithm of employing a "lost data amount per unit space" as a statistic index is provided so that the data generation unit 31 can generate feature data having a smaller "lost data amount per unit space" than first feature data and output the generated feature data as second feature data. In this way, when, for example, acquiring feature data, feature data with a small lost data amount can be output, so detailed data is not necessarily required, thereby allowing measurement procedures to be omitted.

The following describes an example of the generation of minute-scale material surface uneven-shape data by referring to FIG. 26. FIG. 26 indicates double-logarithmic PSD graphs for material surface uneven-shape data, with FIG. 26(A) indicating a double-logarithmic PSD graph for minute-scale material surface uneven-shape data generated in accordance with the self-affinity law. As indicated in FIG. 26(A), the plot in the double-logarithmic PSD graph is a straight line extending to the lower right with an upper-left portion 261 indicating input data, and a lower-right portion 262 indicating predicted data predicted from the input data.

FIG. 26(B) indicates a double-logarithmic PSD graph for a situation in which a given material surface does not conform to the self-affinity law but exhibits a tendency of curved shape in PSD. A learning model 41 that extends the curve of input data in FIG. 26(B) on the basis of the tendency of a portion of the curve can be built so as to output resolution-improved data. In this case, when creating intermediate data (mock-up high-resolution data), the processing can be performed by performing a conversion step in which the curve is considered.

FIG. 26(C) indicates a double-logarithmic PSD graph for a situation in which a given material surface does not conform to equivalent self-affinity laws along the respective axes on a two-dimensional plane but exhibits a self-affinity law in which a different level is attained for each axis. As indicated in the double-logarithmic graph in FIG. 26(C), for example, when PSD slopes are different between the axes x and y of a two-dimensional image, the data generation unit 31 can also generate data with improved image quality.

For example, when two-dimensional material surface uneven-shape data can be represented using two axes of x (direction 1) and y (direction 2) and indicate different PSD slopes, high-resolution data can be predicted by setting different restrictions for direction 1 and direction 2 in the conversion step of creating mock-up high-resolution data from among the training steps. Another method may involve separating the training process for direction 1 from that for direction 2, and for example, an output obtained as a result of completing the prediction for direction 1 can be used for as input for the prediction for direction 2.

When the training processes for direction 1 and direction 2 are separated, training does not necessarily need to be finished by being performed once for each of direction 1 and direction 2, but the process may be repeated in the order of direction 1, direction 2, direction 1, direction 2, ..., thereby improving the accuracy.

Descriptions have been given on the basis of double-logarithmic graphs in accordance with PSD definitions. However, in view of the principle of improving the matching property with a given straight line or line segment being set as a target, a double-logarithmic graph or a PSD does not necessarily need to be dealt with, but a target law may be set on a single-logarithmic graph or an ordinary graph. Alternatively, a non-PSD index (index pertaining to the fact about, for example, whether local unevenness is close to an actually measured value, whether surface roughness is close to an actually measured value, or whether an image evaluation index (e.g., PSNR, SSIM) with material surface as two-dimensional image is good) may be used.

Using a learning model 41 having an algorithm of employing "material-structure local unevenness" as a statistic index as noted above allows the data generation unit 31 to generate and output uneven-shape data (second feature data) having "material-structure local unevenness" closer to an actually measured value than that of two-dimensional measured material surface uneven-shape data is. Meanwhile, using a learning model 41 having an algorithm of employing "material-surface surface roughness" as a statistic index allows the data generation unit 31 to generate and output uneven-shape data (second feature data) having "material-surface surface roughness" closer to an actually measured value than that of two-dimensional measured material surface uneven-shape data is. Furthermore, using a learning model 41 having an algorithm of employing an "image evaluation index with material surface as two-dimensional image" as a statistic index allows the data generation unit 31 to generate and output uneven-shape data (second feature data) having an "image evaluation index with material surface as two-dimensional image" closer to an actually measured value than that of two-dimensional measured material surface uneven-shape data is.

When determining which of the indexes is suitable, for example, settings may be made by referring to the properties (classifications such as metal and ceramic, state of surface treatment in terms of, for example, polishing) of a real material, or settings may be made by analyzing data on a real material sample and by determining, according to the difference from situations in which the present device is implemented on a small scale (small data amount or small execution count), the most suitable index for which the matching property is to be improved.

For example, in the case of a diamond-like carbon surface immediately after film formation, the double-logarithmic PSD graph assumes the shape of a straight line extending generally to the lower right, so the PSD slope can be set as an index.

While repeating training, settings may be made so as to vary a target index, and the training process may be set so as to satisfy a plurality of indexes in the end.

Similarly, in view of the principle of the data generation by the server 1 in embodiments, the material surface does not necessarily need to be dealt with, and a three-dimensional structure can be output by inputting a given law pertaining to another performance (e.g., grain boundary distribution in a metal bulk, distribution of polymer alloy structures in a resin material) of the material. The present invention can also be applied to non-material structures (e.g., plant shapes or geometric patterns conforming to the self-affinity law).

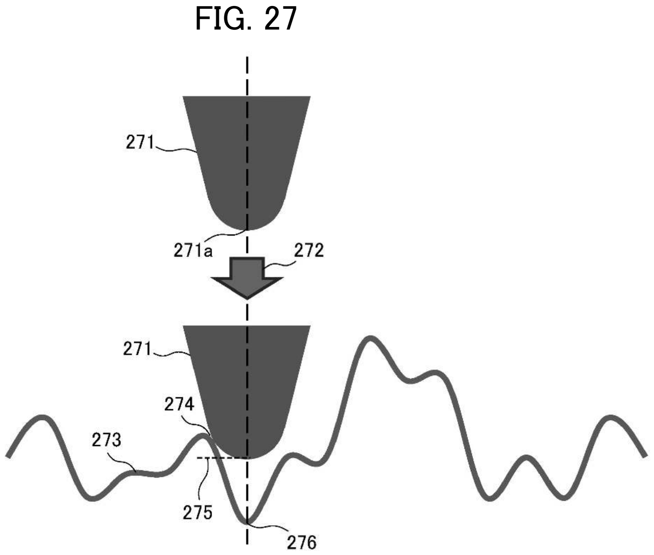

By referring to FIGS. 27 and 28, the following describes a mechanism by which physical noise is generated when measuring material surface uneven-shape data (feature data). FIG. 27 illustrates a mechanism by which physical noise is generated when measuring material surface uneven-shape data (feature data). FIG. 28 illustrates an example of feature data that differs according to whether physical noise has been generated. FIG. 28(A) indicates an example of feature data in which physical noise is not generated. FIG. 28(B) indicates an example of feature data in which physical noise has been generated.

For example, when measuring the uneven shape of a material surface by using a measurement instrument such an atomic force microscope (AFM), a needle-shaped tip 271 (probe) is, as depicted in FIG. 27, lowered in the direction indicated by an arrow 272 and thus is brought close to a material surface 273 so as to sense (measure) the uneven shape of the material surface 273. Specifically, a physical manipulation of causing the tip 271 (probe) to trace the uneven shape of the material surface is performed.

For example, when bringing the tip 271 close to the horizontal surface of the material by lowering the tip 271 vertically from above, a leading end 271a (lowest point) of the tip is not necessarily in contact with the material surface 273 when it has been sensed that the chip 271 has come into contact with the material surface 273, because the leading end 271a of the tip is finite-sized (the leading end of the tip has a hemispheric shape, as would be clear from an enlarged view).

In the example of FIG. 27, a side surface 274 of the leading end 271a of the tip is in contact with the material surface 273, and the height of the tip 271a in this situation is sensed as a position 275 on the material surface 273 from measurement perspective. In this case, the measured position 275 differs from a real position 276 of the material surface 273, and performing similar sensing over the entirety of the material surface will provide a measurement result with noise.

Material surface uneven-shape data (feature data) containing no physical noise is obtained in the form of data without noise such as that depicted in FIG. 28(A), while physical-noise-containing material surface uneven-shape data obtained as a result of the sensing depicted in FIG. 27 is output in the form of data with physical noise such as that depicted in FIG. 28(B).

With respect to the example of FIG. 28, when acquiring material surface uneven-shape data, a learning model 41 that has been built so as to employ, as a statistic index, the amount of noise capable of being defined through a physical manipulation of causing the tip (probe) to trace the uneven shape of the material surface may be used, thereby allowing material surface uneven-shape data with little noise to be generated. Specifically, a learning model 41 that has been built by being trained for the relationship between feature data containing physical noise and high-resolution feature data containing no noise by means of a plurality of samples may be used so that resolution-improved feature data containing no physical noise can be predicted from input data containing physical noise. Thus, the input data containing noise can be converted in accordance with the prediction so as to generate and output resolution-improved data with reduced noise.

By referring to FIG. 29, the following describes data differences based on whether white noise is present. FIG. 29 illustrates data differences based on whether white noise is present, FIG. 29(A) indicating material surface uneven-shape data without noise, FIG. 29(B) indicating data on white noise, FIG. 29(C) indicating material surface uneven-shape data containing white noise. White noise occurs statistically homogeneously over a measurement range. For example, if the white noise in FIG. 29(B) occurs in (is applied to) the uneven-shape data in FIG. 29(A), the data is replaced with data such as that in FIG. 29(C).

With respect to the example of FIG. 29, a learning model 41 that has been built so as to employ, as a statistic index, the amount of white noise during the acquisition of material surface uneven-shape data may be used, thereby allowing material surface uneven-shape data with little noise to be generated.

Providing a learning model 41 having an algorithm of employing a "noise amount per unit space" as a statistic index as described above by referring to FIGS. 27 to 29 allows the data generation unit 31 to generate and output material surface uneven-shape data (second feature data) having a smaller "noise amount per unit space" than measured material surface uneven-shape data (first feature data). In the examples noted above, with respect to output, an index pertaining to the fact about, for example, whether a noise amount per unit space is small (the noise in this case is, for example, an amount that can be defined through a physical manipulation or the amount of white noise) can be used as an index indicating a better result than input, besides the standpoints noted above.

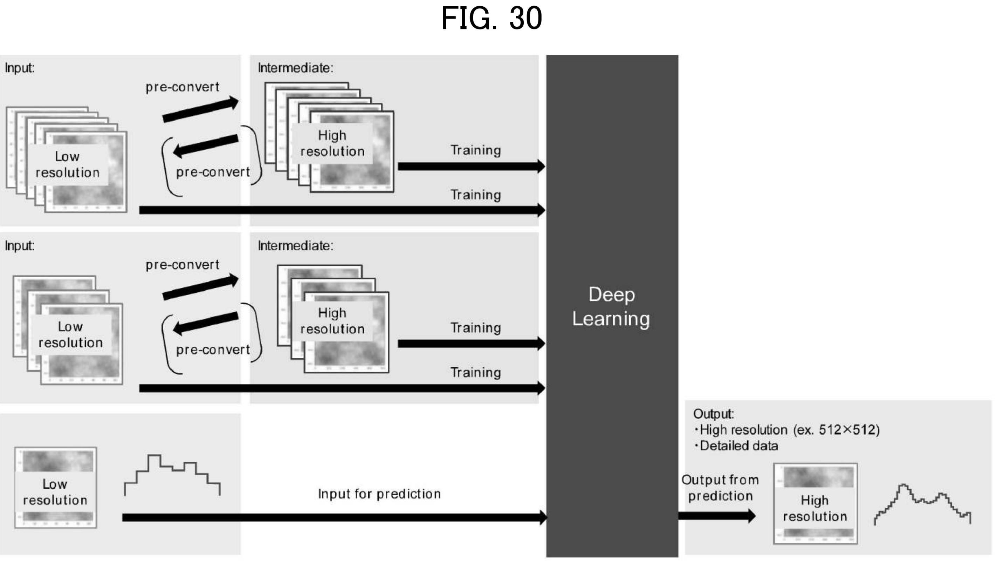

FIG. 30 illustrates, with respect to the server in embodiments, a configuration example for a situation in which data conversion processing is performed after a learning model 41 has been subjected to fine-tuning. The server 1 may perform a training step not only once but two or more times. In this case, a publicly known fine-tuning method may be used. In this situation, the learning model 41 is trained with a data set [1] in a first training step, and is trained with a data set [2] in a second training step. By being subjected to training on a certain scale with the data set [1], the learning model 41 can accurately output a result even if the number of pieces of data of the data set [2] is small.

For example, in a case where a specimen from which it is difficult to acquire a multitude of pieces of data, such as experimental data, is used, a data set [1] pertaining to a similar material and formed from a multitude of pieces of data is prepared, and the first training is performed. Then, a data set [2] formed from a small number of pieces of data is prepared for the specimen from which it is difficult to acquire data, and the second training is performed. In this way, the present device can be used even when the number of pieces of data on a specimen of interest is small.

In the examples noted above, with respect to output, an index based on the standpoints noted above can be used as an index indicating a better result than input.

In the present invention, in accordance with the preferable result extraction method indicated above with reference to the processing procedures executed by the server 1, various indexes can be used as necessary, such as an index pertaining to the fact about whether an index defining the uneven shape of a material surface is preferable (e.g., whether local unevenness is close to an actually measured value, whether surface roughness is close to an actually measured value) or whether an image evaluation index with material surface as two-dimensional image (e.g., PSNR, SSIM) is preferable.

Although one embodiment of the present invention has been described, the present invention is not limited to the embodiments described above, and encompasses, for example, variations and improvements with which objects of the present invention can be achieved.

For example, the processing series described above can be executed by hardware or software. In other words, the functional configuration in FIG. 3 is merely exemplary and not particularly limited. In particular, the present invention can be implemented by providing the information processing device with functions with which the entirety of the processing series described above can be performed, and the present invention is not particularly limited to the example in FIG. 3 in terms of what functional blocks are to be used in order to implement the functions. The locations of the functional blocks and the databases are not particularly limited to those in FIG. 3, and the functional blocks and the databases can be positioned at any location. For example, at least some of the functional blocks and databases that are necessary to perform various types of processing may be transferred to, for example, a user terminal. In turn, functional blocks and databases of the user terminal may be transferred to, for example, the server. One functional block may be formed from a single piece of hardware, a single piece of software, or a combination thereof.

In a case where software performs the series of processes, a program forming the software is installed from a network or a recording medium into, for example, a computer. The computer may be incorporated into dedicated hardware. Alternatively, the computer may be one capable of performing various types of functions by being installed with various types of programs, e.g., server, general-purpose smartphone or personal computer.

Recording media including such a program are formed from, for example, removable media (not shown) distributed separately from device bodies in order to provide the program to, for example, users, or recording media provided to, for example, users in a state of being incorporated into device bodies in advance.

Steps herein for describing the program recorded in the recording media include, as a matter of course, processes that are performed in order in time series, and also include processes that are not necessarily performed in time series but performed in parallel or separately from each other. The term "system" herein means the entirety of devices formed from, for example, a plurality of devices and a plurality of means.

In particular, the information processing device to which the present invention is applied can be implemented by providing the same with the following configurations, and can provide various types and forms of embodiments.

(1) In particular, the information processing device (e.g., server 1 in FIG. 3) to which the present invention is applied includes

a data generation unit (e.g., data generation unit 31 and learning model 41 in FIG. 3) for acquiring, with respect to a statistic index indicating the features of a material and on the basis of a prescribed algorithm (e.g., algorithm of the learning model 41) for generating output data that indicates the structure of the material and indicates a better index score than input data indicating the structure of the material, first feature data (e.g., macroscale material surface uneven-shape data) indicating the structure of a prescribed material as the input data, and for generating and outputting, as the output data, second feature data (e.g., atomic-scale material surface uneven-shape data) indicating the structure of the prescribed material. As a result, for the features of a minute substance obtained on a certain scale (e.g., material surface uneven-shape data obtained on a macroscale (e.g., $10^{-6}$ meters or greater)), the features can be grasped on a narrower scale (e.g., atomic-scale (e.g., approximately $10^{-10}$ meters) material surface uneven-shape data).

(2) The prescribed algorithm (e.g., algorithm of the learning model 41) employs a "material-structure data amount per unit space" as the statistic index, and

the data generation unit (e.g., data generation unit 31 and learning model 41 in FIG. 3) is capable of generating and outputting, as the second feature data, feature data having a larger "material-structure data amount per unit space" than the first feature data (e.g., portion denoted by numeral 101 in the graph in FIG. 11, lowermost graph in FIG. 22, graphs in FIG. 26).

(3) The prescribed algorithm (e.g., algorithm of the learning model 41) employs a "material-structure power spectral density" as the statistic index, and the data generation unit (e.g., data generation unit 31 and learning model 41 in FIG. 3) is capable of generating and outputting, as the second feature data, feature data having a "material-structure power spectral density" closer to a theoretical value than that of the first feature data is (e.g., portion denoted by numeral 101 in the graph in FIG. 11, lowermost graph in FIG. 22, graphs in FIG. 26).

(4) The prescribed algorithm uses a double-logarithmic approximate line of power spectral density as the theoretical value for the "material-structure power spectral density" (e.g., portion denoted by numeral 101 in the graph in FIG. 11, lowermost graph in FIG. 22, graphs in FIG. 26).

(5) The prescribed algorithm (e.g., algorithm of the learning model 41) employs a straight line as the approximate line and uses the slope of the straight line as the theoretical value for the "material-structure power spectral density" (e.g., portion denoted by numeral 101 in the graph in FIG. 11, lowermost graph in FIG. 22, graphs in FIG. 26).

(6) The prescribed algorithm (e.g., algorithm of the learning model 41) employs a "lost data amount per unit space" as the statistic index, and

the data generation unit (e.g., data generation unit 31 and learning model 41 in FIG. 3) is capable of generating and outputting, as the second feature data, feature data having a smaller "lost data amount per unit space" than the first feature data (see, for example, FIGS. 23, 24, and 25).

(7) The prescribed algorithm (e.g., algorithm of the learning model 41) employs a "noise amount per unit space" as the statistic index, and

the data generation unit (e.g., data generation unit 31 and learning model 41 in FIG. 3) is capable of generating and outputting, as the second feature data, feature data having a smaller "noise amount per unit space" than the first feature data (see, for example, FIGS. 28 and 29).

(8) The prescribed algorithm (e.g., algorithm of the learning model 41) employs, as the "noise amount per unit space", the amount of noise that can be defined through a physical manipulation performed during the acquisition of the first feature data (manipulation of causing the tip (probe) to trace the uneven shape of a material surface) (see, for example, FIGS. 27 and 28).

(9) The prescribed algorithm (e.g., algorithm of the learning model 41) employs the amount of white noise during the acquisition of the first feature data as the "noise amount per unit space" (see, for example, FIG. 29).

(10) The prescribed algorithm (e.g., algorithm of the learning model 41) employs "material-structure local unevenness" as the statistic index, and

the data generation unit (e.g., data generation unit 31 and learning model 41 in FIG. 3) is capable of generating and outputting, as the second feature data, feature data having "material-structure local unevenness" closer to an actually measured value than that of the first feature data is (see, for example, FIGS. 26 and 30).

(11) The prescribed algorithm (e.g., algorithm of the learning model 41) employs "material-surface surface roughness" as the statistic index, and

the data generation unit (e.g., data generation unit 31 and learning model 41 in FIG. 3) is capable of generating and outputting, as the second feature data, feature data having "material-surface surface roughness" closer to an actually measured value than that of the first feature data is (see, for example, FIGS. 26 and 30).

(12) The prescribed algorithm (e.g., algorithm of the learning model 41) employs an "image evaluation index with material surface as two-dimensional image" as the statistic index, and

the data generation unit (e.g., data generation unit 31 in FIG. 3) is capable of generating and outputting, as the second feature data, feature data having an "image evaluation index with material surface as two-dimensional image" closer to an actually measured value than that of the first feature data is (see, for example, FIGS. 26 and 30).

(13) The information processing device (e.g., server 1 in FIG. 3) further includes

a training unit (e.g., training unit 32 in FIG. 3) for building a machine learning model (e.g., learning model 41 in FIG. 3) that performs machine learning regarding local material structures so as to output the output data upon the input data being input thereto, wherein the prescribed algorithm uses the machine learning model (e.g., learning model 41 in FIG. 3), and

the data generation unit (e.g., data generation unit 31 and learning model 41 in FIG. 3) is capable of inputting the first feature data to the machine learning model (e.g., learning model 41 in FIG. 3) as the input data, and outputting, as the second feature data, the output data obtained from the machine learning model (e.g., learning model 41 in FIG. 3) as a result of the inputting.

(14) The information processing device (e.g., server 1 in FIG. 3) further includes

a training unit (e.g., training unit 41 in FIG. 3) that initially performs training directed at given material structures so as to build a first machine learning model (e.g., learning model 41 in FIG. 3) for outputting the output data upon the input data being input thereto, and then reads the first machine learning model (e.g., learning model 41 in FIG. 3) and performs training directed at material structures for a narrower material classification than the material structures initially directed at, so as to build a second machine learning model (e.g., updated version of the learning model 41 in FIG. 3) for outputting the output data upon the input data being input thereto, wherein the prescribed algorithm uses the second machine learning model (e.g., updated version of the learning model 41 in FIG. 3), and

the data generation unit (e.g., data generation unit 31 and learning model 41 in FIG. 3) is capable of inputting the first feature data to the second machine learning model (e.g., updated version of the learning model 41 in FIG. 3) as the input data, and outputting, as the second feature data, the output data obtained from the second machine learning model (e.g., updated version of the learning model 41 in FIG. 3) as a result of the inputting.

(15) The information processing method to which the present invention is applied is implemented by an information processing device (e.g., server 1 in FIG. 3) and may include
a data generation step (e.g., step S2 in FIG. 4) of acquiring, with respect to a statistic index indicating the features of a material and on the basis of a prescribed algorithm for generating output data (e.g., atomic-scale uneven-shape data, which is represented on a narrower scale than macroscale uneven-shape data) that indicates the structure of the material and indicates a better index score than input data indicating the structure of the material, first feature data (e.g., macroscale uneven-shape data) indicating the structure of a prescribed material as the input data, and generating and outputting, as the output data, second feature data (e.g., atomic-scale uneven-shape data) indicating the structure of the prescribed material.

(16) The program to which the present invention is applied is capable of causing
a computer to perform control processing including a data generation step (e.g., step S2 in FIG. 4) of acquiring, with respect to a statistic index indicating the features of a material and on the basis of a prescribed algorithm for generating output data (e.g., atomic-scale uneven-shape data, which is represented on a narrower scale than macroscale uneven-shape data) that indicates the structure of the material and indicates a better index score than input data indicating the structure of the material, first feature data (e.g., macroscale uneven-shape data) indicating the structure of a prescribed material as the input data, and generating and outputting, as the output data, second feature data (e.g., atomic-scale uneven-shape data) indicating the structure of the prescribed material.

EXPLANATION OF REFERENCE NUMERALS

1: Server, 2: User terminal, 11: CPU, 12: ROM, 13: RAM, 14: Bus, 15: Input-output interface, 16: Input unit, 17: Output unit, 18: Storage unit, 19: Communication unit, 20: Drive, 21: Removable medium, 31: Data generation unit, 32: Training unit, U: User, S: Supervisor, NW: Network, 41: Learning model, 51: Material, 52: coarse-scale material surface uneven-shape data, 53: data on unevenness of material surface obtained with high resolving power, 61: Tip having thick leading end, 62: Rendered image with coarse pixels, 63: Tip having thin leading end, 64: Rendered image with fine pixels, S21: Training step, S22: Inference step, 121: Input data, 122: Intermediate data, 123: Input data, 124: Output data, 151: Generator, 152: Discriminator, 231: Measurement image, 232: Complemented data, 233: Image, 234: Low-resolution data, 235: High-resolution data, 241: Image, 242: Processing, 243: Complemented data, 244: Data, 245: Data, 246: Predicted data, 247: Complemented data, 251: Measurement data, 252: Measurement data, 261: Upper-left portion, 262: Lower-right portion, 271: Tip, 271a: Leading end of tip, 272: Arrow, 273: Material surface, 274: Side surface, 275: Position, 276: Position

**Claims**

1. An information processing device comprising:
a data generation unit for acquiring, with respect to a statistic index indicating features of a material and on a basis of a prescribed algorithm for generating output data that indicates a structure of the material and indicates a better index score than input data indicating the structure of the material, first feature data indicating a structure of a prescribed material as the input data, and for generating and outputting, as the output data, second feature data indicating the structure of the prescribed material.

2. The information processing device according to claim 1, wherein

the prescribed algorithm employs a "material-structure data amount per unit space" as the statistic index, and the data generation unit generates and outputs, as the second feature data, feature data having a larger "material-structure data amount per unit space" than the first feature data.

3. The information processing device according to claim 1, wherein

the prescribed algorithm employs a "material-structure power spectral density" as the statistic index, and the data generation unit generates and outputs, as the second feature data, feature data having a "material-structure power spectral density" closer to a theoretical value than that of the first feature data is.

4. The information processing device according to claim 1, wherein
the prescribed algorithm uses a double-logarithmic approximate line of power spectral density as the theoretical value for the "material-structure power spectral density".

5. The information processing device according to claim 4, wherein
the prescribed algorithm employs a straight line as the approximate line and uses a slope of the straight line as the theoretical value for the "material-structure power spectral density".

6. The information processing device according to claim 1, wherein

the prescribed algorithm employs a "lost data amount per unit space" as the statistic index, and
the data generation unit generates and outputs, as the second feature data, feature data having a smaller "lost data amount per unit space" than the first feature data.

7. The information processing device according to claim 1, wherein

the prescribed algorithm employs a "noise amount per unit space" as the statistic index, and
the data generation unit generates and outputs, as the second feature data, feature data having a smaller "noise amount per unit space" than the first feature data.

8. The information processing device according to claim 7, wherein
the prescribed algorithm employs, as the "noise amount per unit space", an amount of noise that can be defined through a physical manipulation performed during the acquisition of the first feature data.

9. The information processing device according to claim 7, wherein
the prescribed algorithm employs an amount of white noise during the acquisition of the first feature data as the "noise amount per unit space".

10. The information processing device according to claim 1, wherein

the prescribed algorithm employs "material-structure local unevenness" as the statistic index, and
the data generation unit generates and outputs, as the second feature data, feature data having "material-structure local unevenness" closer to an actually measured value than that of the first feature data is.

11. The information processing device according to claim 1, wherein

the prescribed algorithm employs "material-surface surface roughness" as the statistic index, and
the data generation unit generates and outputs, as the second feature data, feature data having "material-surface surface roughness" closer to an actually measured value than that of the first feature data is.

12. The information processing device according to claim 1, wherein

the prescribed algorithm employs an "image evaluation index with material surface as two-dimensional image" as the statistic index, and
the data generation unit generates and outputs, as the second feature data, feature data having an "image evaluation index with material surface as two-dimensional image" closer to an actually measured value than that of the first feature data is.

13. The information processing device according to claim 1, further comprising:

a training unit for building a machine learning model that performs machine learning regarding local material structures so as to output the output data upon the input data being input thereto, wherein
the prescribed algorithm uses the machine learning model, and
the data generation unit inputs the first feature data to the machine learning model as the input data, and outputs, as the second feature data, the output data obtained from the machine learning model as a result of the inputting.

14. The information processing device according to claim 1, further comprising:

a training unit that initially performs training directed at given material structures so as to build a first machine learning model for outputting the output data upon the input data being input thereto, and then reads the first machine learning model and performs training directed at material structures for a narrower material classification than the material structures initially directed at, so as to build a second machine learning model for outputting the output data upon the input data being input thereto, wherein
the prescribed algorithm uses the second machine learning model, and
the data generation unit inputs the first feature data to the second machine learning model as the input data, and outputs, as the second feature data, the output data obtained from the second machine learning model as a result of the inputting.

15. An information processing method implemented by an information processing device, the information processing method comprising:
a data generation step of acquiring, with respect to a statistic index indicating features of a material and on a basis of a prescribed algorithm for generating output data that indicates a structure of the material and indicates a better index score than input data indicating the structure of the material, first feature data indicating a structure of a prescribed material as the input data, and of generating and outputting, as the output data, second feature data indicating the structure of the prescribed material.

16. A program for causing a computer to perform control processing comprising:
a data generation step of acquiring, with respect to a statistic index indicating features of a material and on a basis of a prescribed algorithm for generating output data that indicates a structure of the material and indicates a better index score than input data indicating the structure of the material, first feature data indicating a structure of a prescribed material as the input data, and of generating and outputting, as the output data, second feature data indicating the structure of the prescribed material.

# FIG. 1

# FIG. 2

SERVER

- CPU (11)
- ROM (12)
- RAM (13)

14

INPUT-OUTPUT INTERFACE (15)

- INPUT UNIT (16)
- OUTPUT UNIT (17)
- STORAGE UNIT (18)
- COMMUNICA-TION UNIT (19)
- DRIVE (20)
  - REMOVABLE MEDIUM (21)

FIG. 3

EP 4 675 284 A1

# FIG. 4

PROCESSING START

S1

RECEIVE CONVERSION REQUEST FOR MACROSCALE UNEVEN−SHAPE (MATERIAL STRUCTURE) DATA PERTAINING TO MATERIAL SURFACE FROM USER TERMINAL

S2

ACQUIRE MACROSCALE UNEVEN−SHAPE DATA PERTAINING TO MATERIAL SURFACE AND GENERATE MORE PRECISE UNEVEN SHAPE (DETAILED UNEVEN SHAPE) AS OUTPUT DATA

S3

OUTPUT GENERATED MORE PRECISE UNEVEN−SHAPE DATA TO USER TERMINAL THAT HAS MADE THE REQUEST

PROCESSING END

# FIG. 5

MATERIAL SURFACE
UNEVEN-SHAPE
DATA

MATERIAL SURFACE UNEVEN-
SHAPE DATA ON NARROWER
SCALE

TYPICAL
ANALYSIS

UP-CONVERSION

EP 4 675 284 A1

# FIG. 6

EP 4 675 284 A1

# FIG. 7

# FIG. 8

# FIG. 9

# FIG. 10

# FIG. 11

# FIG. 12

# FIG. 13

Pre-convert

L

Low resolution

Ls (< L)

High resolution

（A）

log[m²/Hz]

Signal² / Frequency

Y0

Y1

131

132

Pre-convert

X0    X1    log[Hz=1/m]

Frequency

（B）

FIG. 14

# FIG. 15

G : Generator
D : Discriminator
z : INPUT LOW-RESOLUTION DATA
x : INTERMEDIATE HIGH-RESOLUTION DATA
G(z) : Generator OUTPUT

# FIG. 16

EP 4 675 284 A1

# FIG. 17

EP 4 675 284 A1

Input → Conv → Act → [Conv BN Act] → ... → Output

| Input | Conv | Act | Conv | BN | Act | | | |

(6) Den → Act → Den → Output

# FIG. 18

EP 4 675 284 A1

FIG. 19

## FIG. 20

# FIG. 21

| | (A) Input (64×64) | (B) Typical DL by using CNN (512×512) | (C) This technique (512×512) | (D) Reference and target (512×512) |
|---|---|---|---|---|
| SLOPE | -0.00003698 | -0.001472 | -0.001961 | -0.001966 |
| INTERCEPT | 0.01569 | 0.5093 | 0.6803 | 0.6826 |

EP 4 675 284 A1

# FIG. 22

First prediction

Second prediction

etc.

After predictions

FIG. 23

completion

LOW RESOLUTION

UP-CONVERSION

□ : UNKNOWN
▨ : KNOWN

EP 4 675 284 A1

# FIG. 24

Legend: □ :UNKNOWN  ■ :KNOWN

241 — HIGH-RESOLUTION PART

242

243

244 — LOW RESOLUTION

245 — RESOLUTION IMPROVEMENT BASED ON THE SAME PROCEDURE

246 — (REPEAT)

247

EP 4 675 284 A1

FIG. 25

FIG. 26

(A)

(B)

(C)

## FIG. 27

EP 4 675 284 A1

# FIG. 28

DATA WITHOUT NOISE

（ A ）

DATA WITH PHYSICAL NOISE

（ B ）

EP 4 675 284 A1

# FIG. 29

( A )

( B )

( C )

# FIG. 30

EP 4 675 284 A1

## INTERNATIONAL SEARCH REPORT

| International application No. |
| --- |
| **PCT/JP2024/011391** |

**A. CLASSIFICATION OF SUBJECT MATTER**

*G01Q 30/04*(2010.01)i; *G01Q 60/24*(2010.01)i; *G06T 7/00*(2017.01)i
FI: G01Q30/04; G06T7/00 350B; G01Q60/24

According to International Patent Classification (IPC) or to both national classification and IPC

**B. FIELDS SEARCHED**

Minimum documentation searched (classification system followed by classification symbols)

G01Q30/04; G01Q60/24; G06T3/00-G06T7/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-528775 A (NANOTRONICS IMAGING, INC.) 21 October 2021 (2021-10-21) paragraphs [0002]-[0015], [0024]-[0029], [0074]-[0098], fig. 1-6 | 1-2, 10-14 |
| Y | paragraphs [0002]-[0015], [0024]-[0029], [0074]-[0098], fig. 1-6 | 3-5, 7-9 |
| Y | JP 2018-195069 A (CANON KABUSHIKI KAISHA) 06 December 2018 (2018-12-06) paragraphs [0009], [0074]-[0076], fig. 6 | 3-5 |
| X | JP 2022-134649 A (TOKYO METROPOLITAN INDUSTRIAL TECHNOLOGY RESEARCH INSTITUTE) 15 September 2022 (2022-09-15) paragraphs [0001]-[0010], [0037]-[0045], fig. 1-6 | 1-2, 6, 15-16 |
| Y | WO 2021/090469 A1 (OLYMPUS CORPORATION) 14 May 2021 (2021-05-14) paragraphs [0060]-[0065], fig. 7 | 7-9 |
| A | WO 2022/008667 A1 (SARTORIUS STEDIM DATA ANALYTICS AB) 13 January 2022 (2022-01-13) entire text, all drawings | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2024** | **23 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/011391**

| Patent document cited in search report | | | Publication date (day/month/year) | Patent family member(s) | | | Publication date (day/month/year) |
|---|---|---|---|---|---|---|---|
| JP | 2021-528775 | A | 21 October 2021 | US | 2020/0013155 | A1 | |
| | | | | paragraphs [0002]-[0015], [0024]-[0029], [0074]-[0098], fig. 1-6 | | | |
| JP | 2018-195069 | A | 06 December 2018 | US | 2018/0336662 | A1 | |
| | | | | paragraphs [0007], [0067]-[0079], fig. 6 | | | |
| JP | 2022-134649 | A | 15 September 2022 | (Family: none) | | | |
| WO | 2021/090469 | A1 | 14 May 2021 | US | 2022/0253979 | A1 | |
| | | | | paragraphs [0077]-[0082], fig. 7 | | | |
| WO | 2022/008667 | A1 | 13 January 2022 | JP | 2023-532755 | A | |
| | | | | entire text, all drawings | | | |

Form PCT/ISA/210 (patent family annex) (July 2022)

**REFERENCES CITED IN THE DESCRIPTION**

**Patent documents cited in the description**

- JP 2012233845 A